(19) Europäisches Patentamt
European Patent Office
Office européen des brevets

(11) EP 4 621 123 A1

(12) EUROPEAN PATENT APPLICATION
published in accordance with Art. 153(4) EPC

(43) Date of publication:
**24.09.2025 Bulletin 2025/39**

(21) Application number: **23891428.7**

(22) Date of filing: **07.11.2023**

(51) International Patent Classification (IPC):
***D06P 5/30*** *(2006.01)* ***C09D 11/30*** *(2014.01)*
***D06P 1/52*** *(2006.01)*

(52) Cooperative Patent Classification (CPC):
**C09D 11/30; D06P 1/52; D06P 5/30**

(86) International application number:
**PCT/JP2023/040100**

(87) International publication number:
**WO 2024/106276 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 JP 2022185287**

(71) Applicant: **Nippon Shokubai Co., Ltd.**
**Osaka-shi, Osaka 541-0043 (JP)**

(72) Inventors:
- **AKIYAMA, Tatsuhiko**
  **Suita-shi, Osaka 564-0034 (JP)**
- **NAKAMOTO, Keiichi**
  **Suita-shi, Osaka 564-0034 (JP)**
- **SHITAMICHI, Kenta**
  **Suita-shi, Osaka 564-0034 (JP)**
- **SAKAMOTO, Yoshimine**
  **Suita-shi, Osaka 564-0034 (JP)**
- **IKEMOTO, Wataru**
  **Suita-shi, Osaka 564-0034 (JP)**

(74) Representative: **Müller-Boré & Partner**
**Patentanwälte PartG mbB**
**Friedenheimer Brücke 21**
**80639 München (DE)**

# (54) POLYMER FOR TEXTILE PRINTING INK, EMULSION FOR TEXTILE PRINTING INK CONTAINING SAID POLYMER, AND TEXTILE PRINTING INK

(57) An object of the present invention is to provide a novel textile printing ink that can produce a textile printed product exhibiting excellent fastness to wet rubbing. The above-described problem can be solved by a textile printing ink containing a polymer having a structural unit derived from an ester of (meth)acrylic acid and a secondary alcohol.

EP 4 621 123 A1

## Description

TECHNICAL FIELD

The present invention relates to a polymer for a textile printing ink, an emulsion for a textile printing ink containing the polymer, and a textile printing ink.

BACKGROUND ART

Textile printing refers to printing of images or other expressions on a fabric such as a cloth or a textile product using an ink. For example, Patent Document 1 discloses an invention related to a textile printing method, and describes that a textile printed product having excellent fastness to washing and fastness to rubbing can be easily produced by adjusting the fabric heating temperature, the ink ejection amount, and the number of printing times.

CITATION LIST

PATENT DOCUMENT

Patent Document 1: JP 2018-9260 A

SUMMARY OF INVENTION

TECHNICAL PROBLEM

However, depending on the printing target (the type of the fabric), it may not be possible to adopt appropriate conditions for the heating temperature of the fabric, the ink ejection amount, the number of printing times, and the like. Therefore, an object of the present invention is to provide a novel textile printing ink that can be used to produce a textile printed product (a fabric printed with the textile printing ink) exhibiting excellent fastness to wet rubbing without requiring, as an essential measure, adjustments to details such as the heating temperature of the fabric, the ink ejection amount, and the number of printing times. Another object of the present invention is to provide a polymer suitable for the textile printing ink, and an emulsion containing the polymer.

SOLUTION TO PROBLEM

As a result of intensive studies for solving the above-mentioned problems, the present inventors have discovered that a textile printed product produced using a novel textile printing ink containing a polymer having a structural unit derived from an ester of (meth)acrylic acid and a secondary alcohol exhibits excellent fastness to wet rubbing. The present invention has been completed on the basis of this finding.

Accordingly, the present invention is as follows.

[1] A textile printing ink containing a polymer having a structural unit derived from an ester of (meth)acrylic acid and a secondary alcohol.

[2] The textile printing ink according to [1], wherein a content of the polymer in the textile printing ink is from 1 to 30 mass%.

[3] The textile printing ink according to [1] or [2], further containing an aqueous solvent containing water and a water-soluble organic solvent, wherein

a content the water-soluble organic solvent is from 10 to 40 mass% per 100 mass% of the aqueous solvent.

[4] The textile printing ink according to any of [1] to [3], wherein the ester of (meth)acrylic acid and a secondary alcohol contains at least one selected from the group consisting of 2-octyl (meth)acrylate and isobornyl (meth)acrylate.

[5] The textile printing ink according to any of [1] to [4], wherein the textile printing ink is for inkjet textile printing.

[6] A fabric printed with the textile printing ink described in any of [1] to [5].

[7] A polymer for a textile printing ink, the polymer having a structural unit derived from an ester of (meth)acrylic acid and a secondary alcohol.

[8] The polymer according to [7], wherein the ester of (meth)acrylic acid and a secondary alcohol contains at least one selected from the group consisting of 2-octyl (meth)acrylate and isobornyl (meth)acrylate.

[9] The polymer according to [7] or [8], wherein a content of the structural unit derived from the ester of (meth)acrylic acid and a secondary alcohol is from 5 to 100 mass% per 100 mass% of the polymer.

[10] The polymer according to any of [7] to [9], wherein the polymer has a glass transition temperature of from -50 to

10°C.

[11] An emulsion for a textile printing ink, the emulsion containing the polymer described in any of [7] to [10].

[12] A method for textile printing using an ink containing a polymer having a structural unit derived from an ester of (meth)acrylic acid and a secondary alcohol.

[13] The method according to [12], wherein a content of the polymer in the ink is from 1 to 30 mass%.

[14] The method according to [12] or [13], wherein the ink further contains an aqueous solvent containing water and a water-soluble organic solvent, and a content of the water-soluble organic solvent is from 10 to 40 mass% per 100 mass% of the aqueous solvent.

[15] The method according to any of [12] to [14], wherein the textile printing is implemented by an inkjet method.

[16] The method according to any of [12] to [15], wherein the ester of (meth)acrylic acid and a secondary alcohol contains at least one selected from the group consisting of 2-octyl (meth)acrylate and isobornyl (meth)acrylate.

[17] The method according to any of [12] to [16], wherein a content of the structural unit derived from the ester of (meth) acrylic acid and a secondary alcohol is from 5 to 100 mass% per 100 mass% of the polymer.

[18] The method according to any of [12] to [17], wherein the polymer has a glass transition temperature of from -50 to 10°C.

[19] A method for producing a printed fabric, the method including printing on a fabric an ink containing a polymer having a structural unit derived from an ester of (meth)acrylic acid and a secondary alcohol.

[20] The method according to [19], wherein a content of the polymer in the ink is from 1 to 30 mass%.

[21] The method according to [19] or [20], wherein the ink further contains an aqueous solvent containing water and a water-soluble organic solvent, and a content of the water-soluble organic solvent is from 10 to 40 mass% per 100 mass% of the aqueous solvent.

[22] The method according to any of [19] to [21], wherein the ink is printed on the fabric by an inkjet method.

[23] The method according to any of [19] to [22], wherein the ester of (meth)acrylic acid and a secondary alcohol contains at least one selected from the group consisting of 2-octyl (meth)acrylate and isobornyl (meth)acrylate.

[24] The method according to any of [19] to [23], wherein a content of the structural unit derived from the ester of (meth) acrylic acid and a secondary alcohol is from 5 to 100 mass% per 100 mass% of the polymer.

[25] The method according to any of [19] to [24], wherein the polymer has a glass transition temperature of from -50 to 10°C.

ADVANTAGEOUS EFFECTS OF INVENTION

The present invention can provide a novel textile printing ink that can produce a textile printed product exhibiting excellent fastness to wet rubbing.

DESCRIPTION OF EMBODIMENTS

An embodiment of the present invention is described below, but the present invention is not limited thereto. In the present specification, an expression of "from A to B" indicating a numerical range means "A or more and B or less" unless otherwise specified. Furthermore, the term "(meth)acrylic acid" means acrylic acid or methacrylic acid, and the term "(meth)acrylate" means acrylate or methacrylate. The same applies to terms such as "(meth)acryloxy" and "(meth) acryloyl". In addition, the phrase "structural unit derived from" corresponds to a structure in which ethylenically unsaturated double bonds included in each of the monomer components are opened (a structure in which double bonds (C=C) become single bonds (-C-C-)).

The textile printing ink of the present invention is characterized by containing a polymer having a structural unit derived from an ester of (meth)acrylic acid and a secondary alcohol (hereinafter, the polymer may be referred to as polymer A). That is, the polymer A is suitable for use in a textile printing ink, and the use of the polymer A in a textile printing ink is also included in the present invention. In addition, the polymer A can be said to be a polymer for a textile printing ink, and this polymer for a textile printing ink is also included in the present invention.

Polymer A

Hereinafter, the respective monomer components constituting the polymer A are described.

Ester of (Meth)acrylic Acid and Secondary Alcohol

The secondary alcohol constituting the ester of (meth)acrylic acid and the secondary alcohol (hereinafter, the ester may be referred to as monomer b) is preferably an alcohol in which two aliphatic hydrocarbon groups and one hydrogen atom are bonded to the carbon atom that is directly bonded to the hydroxy group. The two aliphatic hydrocarbon

groups bonded to the carbon atom may be bonded to each other at any position to form a ring containing the carbon atom.

That is, the secondary alcohol is preferably an alcohol in which two alkyl groups (groups represented by $C_nH_{2n+1}$) and one hydrogen atom are bonded to a carbon atom directly bonded to a hydroxy group (hereinafter, the alcohol may be referred to as a secondary alkyl alcohol), or an alcohol that has a saturated aliphatic hydrocarbon ring in which a carbon atom directly bonded to a hydroxy group serves as a constituent member, and has one hydrogen atom bonded to the carbon atom thereof (hereinafter, the alcohol may be referred to as a secondary alicyclic alcohol).

The alkyl group may be linear or branched, but is preferably linear. The number of carbons of the alkyl group is preferably from 1 to 20, and more preferably from 1 to 12.

The saturated aliphatic hydrocarbon ring may be monocyclic or polycyclic. The number of carbons of the saturated aliphatic hydrocarbon ring is preferably from 3 to 18.

The number of carbons of the secondary alcohol is preferably from 3 to 21, more preferably from 4 to 18, and still more preferably from 6 to 15.

Examples of the ester of (meth)acrylic acid and the secondary alkyl alcohol include compounds represented by the following Formula (b1).

[Chem. 1]

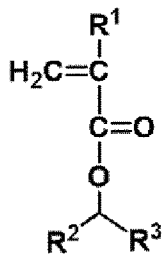

(b1)

[In Formula (b1), $R^1$ represents a hydrogen atom or a methyl group. $R^2$ and $R^3$ each represent an alkyl group, the total number of carbons in the alkyl groups of $R^2$ and $R^3$ is from 2 to 20, and the number of carbons in $R^2$ is equal to or less than the number of carbons in $R^3$.]

The alkyl groups represented by $R^2$ and $R^3$ may be linear or branched, but are preferably linear.

Specific examples of the alkyl groups represented by $R^2$ and $R^3$ include linear alkyl groups such as a methyl group, an ethyl group, an n-propyl group, an n-butyl group, an n-pentyl group, an n-hexyl group, an n-heptyl group, an n-octyl group, an n-nonyl group, an n-decyl group, and an n-dodecyl group; and branched alkyl groups such as an isopropyl group, an isobutyl group, a tert-butyl group, an isopentyl group, a neopentyl group, a 2,3 -dimethyl-2-butyl group, a 3-methylheptyl group, and a 2-ethylhexyl group.

The total number of carbons of the alkyl groups of $R^2$ and $R^3$ is preferably from 3 to 20, more preferably from 3 to 15, and still more preferably from 5 to 14.

Moreover, the number of carbons of the alkyl group of $R^2$ is preferably from 1 to 4, more preferably 1 or 2, and still more preferably 1.

The number of carbons of the alkyl group of $R^3$ is preferably from 4 to 12, more preferably from 4 to 10, and still more preferably from 5 to 8.

Specific examples of the ester of (meth)acrylic acid and a secondary alkyl alcohol include isopropyl (meth) acrylate, 2-butyl (meth)acrylate, 2-pentyl (meth)acrylate, 3-methyl-2-butyl (meth)acrylate, 3-pentyl (meth)acrylate, 2-hexyl (meth)acrylate, 3,3-dimethyl-2-butyl (meth)acrylate, 3-methyl-2-pentyl (meth)acrylate, 4-methyl-2-pentyl (meth) acrylate, 2,4-dimethyl-3-pentyl (meth)acrylate, 2-heptyl (meth)acrylate, 2-methyl-3-hexyl (meth)acrylate, 3-heptyl (meth) acrylate, 4-heptyl (meth)acrylate, 5-methyl-2-hexyl (meth)acrylate, 2-octyl (meth)acrylate, 2,2-dimethyl-3-hexyl (meth) acrylate, 2,5-dimethyl-3-hexyl (meth)acrylate, 3-octyl (meth)acrylate, 4-octyl (meth)acrylate, 5-methyl-2-heptyl (meth) acrylate, 5-methyl-3-heptyl (meth)acrylate, 6-methyl-2-heptyl (meth)acrylate, and 6-methyl-3-heptyl (meth)acrylate.

Specific examples of the ester of (meth)acrylic acid and a secondary alicyclic alcohol include esters of (meth) acrylic acid and a cycloalkanol (that is, cycloalkyl (meth)acrylates), such as cyclopropyl (meth)acrylate, cyclopentyl (meth) acrylate, cyclohexyl (meth)acrylate, cycloheptyl (meth)acrylate, and cyclooctyl (meth)acrylate; and esters of (meth)acrylic acid and a secondary polycyclic alcohol, such as isobornyl (meth)acrylate.

The monomer b is preferably a compound represented by Formula (b1), an ester of (meth)acrylic acid and a cycloalkanol (cycloalkyl (meth)acrylate), or isobornyl (meth)acrylate, is more preferably a compound represented by Formula (b1) in which $R^2$ is an alkyl group having from 1 to 4 carbons and $R^3$ is an alkyl group having from 4 to 12 carbons, an ester of (meth)acrylic acid and a cycloalkanol having from 6 to 10 carbons, or isobornyl (meth)acrylate, and is even more preferably 2-octyl (meth)acrylate, cyclohexyl (meth)acrylate, or isobornyl (meth)acrylate.

In particular, the monomer b preferably contains at least a compound represented by Formula (b1) and/or an

ester of (meth)acrylic acid and a secondary polycyclic alcohol; more preferably contains at least a compound represented by Formula (b1) in which $R^2$ is an alkyl group having 1 or 2 carbons and $R^3$ is an alkyl group having from 4 to 10 carbons, and/or isobornyl (meth)acrylate; and even more preferably contains at least 2-octyl (meth)acrylate and/or isobornyl (meth) acrylate.

The total content of the structural unit derived from the compound represented by Formula (b1) and the structural unit derived from an ester of (meth)acrylic acid and a secondary polycyclic alcohol is preferably from 30 to 100 mass%, more preferably from 50 to 100 mass%, even more preferably from 70 to 100 mass%, and may be from 80 to 98 mass%, per 100 mass% of the structural unit derived from the monomer b. In particular, per 100 mass% of the structural unit derived from the monomer b, the total content of the structural unit derived from the compound represented by Formula (b1) in which $R^2$ is an alkyl group having 1 or 2 carbons and $R^3$ is an alkyl group having from 4 to 10 carbons, and the structural unit derived from isobornyl (meth)acrylate is more preferably adjusted to fall within the above range, and the total content of the structural unit derived from 2-octyl (meth)acrylate and the structural unit derived from isobornyl (meth)acrylate is even more preferably adjusted to fall within the above range.

From the viewpoint of enhancing the water resistance of the produced textile printed product, the monomer b preferably contains an ester of methacrylic acid and a secondary alcohol; more preferably contains at least a compound in which $R^1$ in Formula (b1) is a methyl group, and/or an ester of methacrylic acid and a secondary polycyclic alcohol; even more preferably contains at least a compound represented by Formula (b1) in which $R^1$ is a methyl group, $R^2$ is an alkyl group having 1 or 2 carbons, and $R^3$ is an alkyl group having from 4 to 10 carbons, and/or isobornyl methacrylate; and yet even more preferably contains at least 2-octyl methacrylate and/or isobornyl methacrylate.

From the viewpoint of further enhancing the fastness to wet rubbing of the produced textile printed product, the monomer b preferably contains a compound represented by Formula (b1), more preferably contains a compound represented by Formula (b1) in which $R^2$ is an alkyl group having 1 or 2 carbons and $R^3$ is an alkyl group having from 4 to 10 carbons, and still more preferably contains 2-octyl (meth)acrylate. The content of the structural unit derived from the compound represented by the Formula (b1) is preferably from 30 to 100 mass%, more preferably from 50 to 100 mass%, still more preferably from 70 to 100 mass%, and may be from 80 to 98 mass%, per 100 mass% of the structural unit derived from the monomer b. In particular, per 100 mass% of the structural unit derived from the monomer b, the content of the structural unit derived from the compound represented by the Formula (b1) in which $R^2$ is an alkyl group having 1 or 2 carbons and $R^3$ is an alkyl group having from 4 to 10 carbons is more preferably adjusted to fall within the above range, and still more preferably, the content of the structural unit derived from 2-octyl (meth)acrylate is adjusted to fall within the above range.

From the viewpoint of reducing the environmental load, the monomer b is preferably an ester of (meth)acrylic acid and a secondary alcohol that can be synthesized using a biomass material as a raw material. Examples of the ester of (meth)acrylic acid and a secondary alcohol that can be synthesized using a biomass material as a raw material include 2-octyl (meth)acrylate, isobornyl (meth)acrylate, and the like. Among these, 2-octyl (meth)acrylate and isobornyl (meth) acrylate are preferable.

Per 100 mass% of the structural unit derived from the monomer b in the polymer A, the total content of the structural unit derived from an ester of (meth)acrylic acid and a secondary alcohol that can be synthesized using a biomass material as a raw material (preferably 2-octyl (meth)acrylate and isobornyl (meth)acrylate) is preferably 50 mass% or more, more preferably 60 mass% or more, and still more preferably 70 mass% or more. The upper limit of the above-described content is not particularly limited, and may be 100 mass% or 95 mass% or less.

For example, 2-octyl (meth)acrylate can be produced by esterifying (meth)acrylic acid and 2-octanol obtained by cracking ricinoleic acid derived from castor oil collected and extracted from seeds of castor beans, followed by distillation from a mixture containing sebacic acid as a by-product.

Isobornyl (meth)acrylate can be produced by isomerizing $\alpha$-pinene obtained from pine resin or pine essential oil to camphene, and then reacting the camphene with (meth)acrylic acid.

The (meth)acrylic acid used in the production of 2-octyl (meth)acrylate, isobornyl (meth)acrylate, or the like may be bio-derived or petroleum-derived.

One type or two or more types of the structural unit derived from the monomer b may be contained in the polymer A.

The proportion of the structural unit derived from the monomer b in the polymer A is preferably 5 mass% or more, more preferably 10 mass% or more, still more preferably 15 mass% or more, and particularly preferably 20 mass% or more, and may be 100 mass%, but is preferably 95 mass% or less, more preferably 80 mass% or less, and still more preferably 70 mass% or less. That is, the proportion of the structural unit derived from the monomer b in the polymer A is, for example, from 5 to 100 mass%, preferably from 10 to 95 mass%, more preferably from 15 to 80 mass%, and still more preferably from 20 to 70 mass%. When the proportion of the structural unit derived from the monomer b is adjusted to fall within the above range, the fastness to wet rubbing and the fastness to washing (particularly, the fastness to washing) are further improved.

The polymer A may contain a structural unit derived from a monomer (hereinafter, may be referred to as a

monomer c) other than the monomer b. The monomer c is not particularly limited, and as described below, examples thereof include a styrene-based monomer, an alkyl (meth)acrylate ester other than the monomer b, an acid group-containing monomer, a hydroxyl group-containing monomer, and other monomers. The monomer c is particularly preferably selected as appropriate such that the glass transition temperature of the polymer A falls within the range described below.

For example, when the polymer A contains, per 100 mass% of the structural unit derived from the monomer b, 50 mass% or more (preferably 55 mass% or more, and more preferably 70 mass% or more) of a structural unit derived from the monomer b whose homopolymer has a glass transition temperature of -20°C or lower (preferably from -30 to -80°C) (hereinafter, the monomer may be referred to as a monomer $b_L$), the polymer A preferably contains a structural unit derived from the monomer $b_L$ and a structural unit derived from a monomer c whose homopolymer has a glass transition temperature of from 0 to 120°C (hereinafter, the monomer may be referred to as a monomer $c_H$).

The monomer $b_L$ can be selected from the above-mentioned monomers b such that a homopolymer thereof has a glass transition temperature of -20°C or lower, and examples thereof include a compound represented by Formula (b1) in which $R^1$ is hydrogen and the homopolymer thereof has a glass transition temperature of -20°C or lower. Among these, 2-octyl acrylate is preferable as the monomer $b_L$.

Examples of the monomer $c_H$ include styrene-based monomers and $C_{1-5}$ alkyl methacrylate esters, which are described below. Among these, styrene and methyl methacrylate are preferable.

The total content of the structural unit derived from the monomer $b_L$ and the structural unit derived from the monomer $c_H$ (in particular, the total content of the structural unit derived from the monomer $b_L$ and the structural unit derived from at least one monomer selected from styrene-based monomers and $C_{1-5}$ alkyl methacrylate esters) is preferably from 40 to 100 mass%, more preferably from 50 to 95 mass%, and may be from 70 to 95 mass% or from 85 to 95 mass%, in the polymer A.

When the polymer A contains, per 100 mass% of the structural unit derived from the monomer b, more than 50 mass% (preferably 55 mass% or more, more preferably 70 mass% or more) of a structural unit derived from a monomer b whose homopolymer has a glass transition temperature exceeding - 20°C (higher than -20°C) (hereinafter, the monomer may be referred to as a monomer $b_H$), the polymer A preferably contains the structural unit derived from the monomer $b_H$ and a structural unit derived from a monomer c whose homopolymer has a glass transition temperature of lower than 0°C (preferably from -80 to -10°C) (hereinafter, the monomer may be referred to as a monomer $c_L$). The glass transition temperature of the homopolymer of the monomer $b_H$ is preferably from -10 to 100°C.

The monomer $b_H$ may be selected from the above-mentioned monomers b such that the homopolymer thereof has a glass transition temperature of higher than -20°C, and examples thereof include a compound represented by Formula (b1) in which $R^1$ is methyl group and the glass transition temperature of the homopolymer thereof is higher than -20°C, cycloalkyl methacrylate, and isobornyl (meth)acrylate. Among these, as the monomer $b_H$, 2-octyl methacrylate, cycloalkyl methacrylate, and isobornyl (meth)acrylate are preferable, and 2-octyl methacrylate and isobornyl (meth) acrylate are more preferable.

Examples of the monomer $c_L$ include low-Tg alkyl (meth)acrylate esters described below, and preferable examples include $C_{4-10}$ alkyl acrylate esters such as n-butyl acrylate, n-pentyl acrylate, n-hexyl acrylate, n-heptyl acrylate, n-octyl acrylate, 2-ethylhexyl acrylate, and n-nonyl acrylate.

The total content of the structural unit derived from the monomer $b_H$ and the structural unit derived from the monomer $c_L$ (in particular, the total content of the structural unit derived from the monomer $b_H$ and the structural unit derived from a $C_{4-10}$ alkyl acrylate ester) is preferably from 40 to 100 mass%, more preferably from 50 to 95 mass%, and may be from 70 to 95 mass% or from 85 to 95 mass%, in the polymer A.

As the "glass transition temperature of the homopolymer" in the present specification, for example, a value described in the "POLYMER HANDBOOK, THIRD EDITION" (written by J. BRANDRUP and E. H. IMMERGUT, 1989, published by John Wiley & Sons, Inc., pages: VI/209 to VI/277) (the lowest value when a plurality of Tg are described) may be adopted. For compounds not described in the "POLYMER HANDBOOK, THIRD EDITION", a value (calculated value) determined by a computer using commercially available software for calculating the glass transition temperature (e.g., "MATERIALS STUDIO" available from Accelrys Software Inc., version: 4.0.0.0, module: Synthia, condition: calculated with a polymerization average molecular weight of 100000) may be used.

The structural unit derived from a monomer other than the monomer b and contained in the polymer A is described in more detail below.

Styrene-Based Monomer

The polymer A preferably contains a structural unit derived from a styrene-based monomer. When the polymer A contains a structural unit derived from a styrene-based monomer, the fastness to wet rubbing and the fastness to washing (particularly, the fastness to washing) are further improved.

Examples of the styrene-based monomer include styrenes which may have one or more substituents such as a

halogen atom (e.g., fluorine atom, chlorine atom, bromine atom, or iodine atom), an alkyl group (e.g., a $C_{1-4}$ alkyl group such as methyl group, ethyl group, n-propyl group, isopropyl group, n-butyl group, or tert-butyl group), a vinyl group, and an alkoxysilyl group (e.g., a $C_{1-4}$ trialkoxysilyl group such as trimethoxysilyl group or triethoxysilyl group). The substituent is preferably at least one selected from a halogen atom and an alkyl group.

Specific examples of the styrene-based monomer include styrene, $\alpha$-methylstyrene, p-methylstyrene, tert-butylstyrene, chlorostyrene, chloromethylstyrene, divinylbenzene, p-styryltrimethoxysilane, and 2-styrylethyltrimethoxysilane. Among these, styrene is preferable.

A single type of the structural unit derived from the styrene-based monomer may be contained alone in the polymer A, or two or more types thereof may be contained.

When the polymer A contains a structural unit derived from a styrene-based monomer, the proportion of the structural unit derived from the styrene-based monomer in the polymer A is preferably 1 mass% or more, more preferably 5 mass% or more, and even more preferably 10 mass% or more, and is preferably 70 mass% or less, more preferably 60 mass% or less, and even more preferably 50 mass% or less. That is, the proportion of the structural unit derived from the styrene-based monomer in the polymer A is, for example, from 0 to 70 mass%, preferably from 1 to 70 mass%, more preferably from 5 to 60 mass%, and still more preferably from 10 to 50 mass%.

The content of the structural unit derived from the styrene-based monomer is, for example, from 0 to 150 parts by mass, preferably from 3 to 100 parts by mass, and more preferably from 5 to 80 parts by mass, per 100 parts by mass of the structural unit derived from the monomer b.

Alkyl (Meth)acrylate Ester

The polymer A may contain an alkyl (meth)acrylate ester other than the monomer b.

Specific examples of the alkyl (meth)acrylate ester other than the monomer b include methyl (meth)acrylate, ethyl (meth)acrylate, n-propyl (meth)acrylate, n-butyl (meth)acrylate, isobutyl (meth)acrylate, tert-butyl (meth)acrylate, n-pentyl (meth)acrylate, isopentyl (meth)acrylate, neopentyl (meth)acrylate, n-hexyl (meth)acrylate, n-octyl (meth)acrylate, 2-ethylhexyl (meth)acrylate, n-nonyl (meth)acrylate, isononyl (meth)acrylate, tridecyl (meth)acrylate, dodecyl (meth) acrylate, stearyl (meth)acrylate, heneicosyl (meth)acrylate, and tetracosyl (meth)acrylate. Among these, $C_{1-20}$ alkyl (meth)acrylate esters are preferable. Also, at least one selected from an alkyl (meth)acrylate ester whose homopolymer has a glass transition temperature (Tg) of -20°C or lower (hereinafter, may be referred to as a low Tg alkyl (meth)acrylate ester) and a $C_{1-5}$ alkyl methacrylate ester is preferable.

The Tg of the low Tg alkyl (meth)acrylate ester is -20°C or lower, preferably from -100 to -20°C, and more preferably from -80 to -30°C. Examples of the low Tg alkyl (meth)acrylate ester include ethyl acrylate, n-propyl acrylate, n-butyl acrylate, isobutyl acrylate, n-pentyl acrylate, n-hexyl acrylate, n-octyl acrylate, 2-ethylhexyl acrylate, n-nonyl acrylate, and isononyl acrylate. Among these, n-butyl acrylate and 2-ethylhexyl acrylate are preferable. When the polymer A contains a constituent unit derived from a low Tg alkyl (meth)acrylate ester, the resultant textile printed product is likely to exhibit excellent texture. In particular, when the polymer A contains a structural unit derived from an ester of (meth)acrylic acid and a secondary alicyclic alcohol, the polymer A preferably further contains a structural unit derived from a low Tg alkyl (meth)acrylate ester.

The $C_{1-5}$ alkyl methacrylate ester is preferably a $C_{1-3}$ alkyl methacrylate ester, and more preferably methyl methacrylate. When the polymer A contains a constituent unit derived from a $C_{1-5}$ alkyl methacrylate ester, the fastness to wet rubbing and the fastness to washing (particularly, the fastness to washing) are further improved. In particular, when the polymer A contains a structural unit derived from an ester of (meth)acrylic acid and a secondary alkyl alcohol, the polymer A preferably further contains a structural unit derived from a $C_{1-5}$ alkyl methacrylate ester.

A single type of the structural unit derived from the alkyl (meth)acrylate ester other than the monomer b may be contained alone in the polymer A, or two or more types thereof may be contained.

When the polymer A contains a structural unit derived from an alkyl (meth)acrylate ester other than the monomer b, the proportion of the structural unit derived from an alkyl (meth)acrylate ester other than the monomer b in the polymer A is, for example, 1 mass% or more, preferably 5 mass% or more, more preferably 15 mass% or more, and even more preferably 30 mass% or more, and preferably 85 mass% or less, more preferably 75 mass% or less, and even more preferably 65 mass% or less. That is, the proportion of the structural unit derived from the alkyl (meth)acrylate ester other than the monomer b in the polymer A is, for example, from 0 to 85 mass%, preferably from 1 to 85 mass%, more preferably from 5 to 75 mass%, even more preferably from 15 to 65 mass%, and still more preferably from 30 to 65 mass%.

In addition, the content of the structural unit derived from the alkyl (meth)acrylate ester other than the monomer b is, for example, from 0 to 300 parts by mass, preferably from 3 to 200 parts by mass, and more preferably from 30 to 180 parts by mass, and may be from 100 to 180 parts by mass, per 100 parts by mass of the structural unit derived from the monomer b.

**In** particular, from the viewpoint of further enhancing fastness to wet rubbing and fastness to washing (particularly, fastness to washing), the polymer A preferably contains a structural unit derived from a styrene-based

monomer and/or a structural unit derived from a $C_{1-5}$ alkyl methacrylate ester, and more preferably contains at least a structural unit derived from a styrene-based monomer. The total proportion of the structural units derived from the styrene-based monomer and the $C_{1-5}$ alkyl methacrylate ester in the polymer A is preferably 1 mass% or more, more preferably 5 mass% or more, and even more preferably 10 mass% or more, and is preferably 70 mass% or less, more preferably 60 mass% or less, and even more preferably 50 mass% or less. That is, the total proportion of the structural units derived from the styrene-based monomer and the $C_{1-5}$ alkyl methacrylate ester in the polymer A is, for example, from 0 to 70 mass%, preferably from 1 to 70 mass%, more preferably from 5 to 60 mass%, and still more preferably from 10 to 50 mass%.

The total content of the structural units derived from the styrene-based monomer and the $C_{1-5}$ alkyl methacrylate ester is, for example, from 0 to 300 parts by mass, preferably from 3 to 200 parts by mass, and more preferably from 30 to 180 parts by mass, per 100 parts by mass of the structural unit derived from the monomer b.

Acid Group-Containing Monomer

The polymer A preferably further contains a structural unit derived from an acid group-containing monomer. When the polymer A contains a structural unit derived from an acid group-containing monomer, the stability of the polymer A is improved, and as a result, generation of aggregates during polymerization can be suppressed. In addition, when the polymer A contains a structural unit derived from an acid group-containing monomer, the structural unit becomes a crosslinking point that reacts with a crosslinking agent described below, and thus a strong coating film (image) can be formed. Therefore, the fastness to rubbing and the fastness to washing can be further improved.

The acid group-containing monomer need only be a monomer having at least one acid group and at least one polymerizable unsaturated group per molecule. Examples of the acid group include a sulfo group and a carboxy group, and a carboxy group is preferable. Specific examples of the acid group-containing monomer include unsaturated monocarboxylic acids such as (meth)acrylic acid, cinnamic acid, and crotonic acid; unsaturated dicarboxylic acids such as maleic acid, fumaric acid, itaconic acid, and citraconic acid; monoesters of unsaturated dicarboxylic acids such as monomethyl maleate, monobutyl maleate, monomethyl itaconate, and monobutyl itaconate; anhydrides of unsaturated dicarboxylic acids such as maleic anhydride; 2-acryloyloxyethylsuccinic acid, 2-acryloyloxyethylphthalic acid, and 2-acryloyloxyethylhexahydrophthalic acid. Among these, unsaturated monocarboxylic acids are preferable, and (meth)acrylic acid is more preferable.

A single type of the structural unit derived from the acid group-containing monomer may be contained alone in the polymer A, or two or more types thereof may be contained.

When the polymer A contains the structural unit derived from an acid group-containing monomer, the proportion of the structural unit derived from the acid group-containing monomer in the polymer A is preferably 0.1 mass% or more, more preferably 0.5 mass% or more or greater than 0.5 mass%, and even more preferably 1.0 mass% or more, and is preferably 10 mass% or less, more preferably 8 mass% or less, and even more preferably 5 mass% or less. That is, the proportion of the structural unit derived from the acid group-containing monomer in the polymer A is, for example, from 0 to 10 mass%, preferably from 0.1 to 10 mass%, more preferably from 0.5 to 8 mass%, even more preferably greater than 0.5 mass% and 8 mass% or less, and still more preferably from 1.0 to 5 mass%.

The content of the structural unit derived from the acid group-containing monomer is, for example, from 0 to 30 parts by mass, preferably from 0.5 to 25 parts by mass, more preferably from 1.0 to 20 parts by mass, and still more preferably from 2.0 to 15 parts by mass, per 100 parts by mass of the structural unit derived from the monomer b.

Hydroxyl Group-Containing Monomer

The polymer A preferably further contains a structural unit derived from a hydroxyl group-containing monomer.

The hydroxyl group-containing monomer need only be a monomer having at least one hydroxyl group and at least one polymerizable unsaturated group per molecule. Specific examples of the hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate; halogen-substituted hydroxyalkyl (meth)acrylates such as 3-chloro-2-hydroxypropyl (meth)acrylate; modified hydroxyalkyl (meth)acrylates such as caprolactone-modified 2-hydroxyethyl (meth)acrylate and 2-(meth)acryloyloxyethyl 2-hydroxyethylphthalate; oxyalkylene-modified monomers (specifically, polyalkylene glycol mono(meth)acrylates) such as diethylene glycol (meth)acrylate and polyethylene glycol (meth) acrylate; and hydroxyl group-containing vinyl monomers such as vinyl alcohol and allyl alcohol. Among these, hydroxyalkyl (meth)acrylates are preferable, and hydroxyalkyl (meth)acrylates having a hydroxyalkyl group having from 1 to 4 carbons are more preferable.

A single type of the structural unit derived from the hydroxyl group-containing monomer may be contained alone in the polymer A, or two or more types thereof may be contained.

When the polymer A contains a structural unit derived from a hydroxyl group-containing monomer, the proportion

of the structural unit derived from the hydroxyl group-containing monomer in the polymer A is preferably 0.1 mass% or more, more preferably 0.3 mass% or more, and even more preferably 0.5 mass% or more, and is preferably 10 mass% or less, more preferably 5 mass% or less, and even more preferably 3 mass% or less. When the proportion is adjusted to fall within the above range, water resistance can be further enhanced. That is, the proportion of the structural unit derived from the hydroxyl group-containing monomer in the polymer A is, for example, from 0 to 10 mass%, preferably from 0.1 to 10 mass%, more preferably from 0.3 to 5 mass%, and still more preferably from 0.5 to 3 mass%.

The content of the structural unit derived from the hydroxyl group-containing monomer is, for example, from 0 to 30 parts by mass, preferably from 0.5 to 20 parts by mass, more preferably from 1.0 to 15 parts by mass, and still more preferably from 0.8 to 8 parts by mass, per 100 parts by mass of the structural unit derived from the monomer b.

Additional Monomer

The polymer A may further have a structural unit derived from an additional monomer other than the above-described monomers (the monomer b, the acid group-containing monomer, the hydroxyl group-containing monomer, the styrene-based monomer, and the alkyl (meth)acrylate ester). The additional monomer need only be a monomer other than the above-described monomers and having at least one polymerizable unsaturated group in the molecule (excluding a reactive emulsifier described below).

Specific examples of the additional monomer include

fluoroalkyl (meth)acrylates such as trifluoroethyl (meth)acrylate, tetrafluoropropyl (meth)acrylate, and octafluoropentyl (meth)acrylate;

aryl (meth)acrylates such as phenyl (meth)acrylate and naphthyl (meth)acrylate;

aralkyl (meth)acrylates such as benzyl (meth)acrylate, phenylethyl (meth)acrylate, methylbenzyl (meth)acrylate, and naphthylmethyl (meth)acrylate;

alkoxyalkyl group-containing (meth)acrylates such as methoxyethyl (meth)acrylate, methoxybutyl (meth)acrylate, ethoxybutyl (meth)acrylate, and trimethylolpropane tripropoxy (meth)acrylate;

carbonyl group-containing (meth)acrylates such as (meth)acryloxyalkyl propenal, acetonyl (meth)acrylate, diacetone (meth)acrylate, 2-hydroxypropyl (meth)acrylate acetyl acetate, butanediol-1,4-acrylate acetyl acetate, and 2-(acetoacetoxy)ethyl (meth)acrylate;

di(meth)acrylates of polyhydric alcohols having 1 to 10 carbons, such as ethylene glycol di(meth)acrylate, propylene glycol di(meth)acrylate, 1,3-butanediol di(meth)acrylate, 1,4-butanediol di(meth)acrylate, 1,6-hexanediol di(meth)acrylate, ethylene oxide-modified 1,6-hexanediol di(meth)acrylate, 1,9-nonanediol di(meth)acrylate, and propylene oxide-modified neopentyl glycol di(meth)acrylate;

alkyl di(meth)acrylates in which the number of moles added of alkylene oxide groups having from 2 to 4 carbons is from 2 to 50, such as polyethylene glycol di(meth)acrylate in which the number of moles added of ethylene oxide is from 2 to 50, polypropylene glycol di(meth)acrylate in which the number of moles added of propylene oxide is from 2 to 50, and tripropylene glycol di(meth)acrylate;

tri(meth)acrylates of polyhydric alcohols having from 1 to 10 carbons, such as ethoxylated glycerin tri(meth)acrylate, propylene oxide-modified glycerol tri(meth)acrylate, ethylene oxide-modified trimethylolpropane tri(meth)acrylate, trimethylolpropane tri(meth)acrylate, and trimethylolpropane triethoxy tri(meth)acrylate;

tetra(meth)acrylates of polyhydric alcohols having from 1 to 10 carbons, such as pentaerythritol tetra(meth)acrylate, dipentaerythritol tetra(meth)acrylate, and ditrimethylolpropane tetra(meth)acrylate;

hexa(meth)acrylates of polyhydric alcohols having from 1 to 10 carbons, such as dipentaerythritol hexa(meth)acrylate;

di(meth)acrylates having a bisphenol skeleton, such as bisphenol A di(meth)acrylate;

2-(2'-vinyloxyethoxyethyl) (meth)acrylate;

(meth)acryloyl group-containing silane coupling agents such as 3-(meth)acryloxypropyltrimethoxysilane, 3-(meth)acryloxypropyltriethoxysilane, 3-(meth)acryloxypropylmethyldimethoxysilane, 3-(meth)acryloxypropylmethyldiethoxysilane, and 3-(meth)acryloxyethoxypropyltrimethoxysilane;

vinyl group-containing silane coupling agents such as vinyltrimethoxysilane and vinyltriethoxysilane;

epoxy group-containing silane coupling agents such as 3-glycidoxypropyltrimethoxysilane, 3-glycidoxypropyltriethoxysilane, and 2-(3,4-epoxycyclohexyl)ethyltrimethoxysilane;

epoxy group-containing (meth)acrylates such as glycidyl (meth)acrylate, $\alpha$-methylglycidyl (meth)acrylate, and 2-glycidyloxyethyl (meth)acrylate;

epoxy group-containing vinyl monomers such as allyl glycidyl ether;

amino group-containing (meth)acrylic monomers such as N,N-dimethylaminomethyl (meth)acrylate and N,N-dimethylaminoethyl (meth)acrylate;

vinyllactam-based monomers such as N-methylvinylpyrrolidone, N-vinylpiperidone, N-vinylcaprolactam, N-vinylpyrrolidone, N-vinyl-2-pyrrolidone, and N-(meth)acryloylpyrrolidone;
maleimide-based monomers such as maleimide, N-phenylmaleimide, and N-cyclohexylmaleimide;
piperidyl (meth)acrylic monomers such as 2,2,6,6-tetramethyl-4-piperidyl (meth)acrylate and 1,2,2,6,6-pentamethyl-4-piperidyl (meth)acrylate;
aziridinyl group-containing (meth)acrylic monomers such as (meth)acryloylaziridine and 2-aziridinylethyl (meth) acrylate;
addition-polymerizable oxazolines such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline;
(meth)acrylamide-based monomers such as (meth)acrylamide, N-monomethyl (meth)acrylamide, N-monoethyl (meth)acrylamide, N,N-dimethyl (meth)acrylamide, N-n-propyl (meth)acrylamide, N-isopropyl (meth)acrylamide, methylenebis(meth)acrylamide, N-butoxymethyl (meth)acrylamide, dimethylaminoethyl (meth)acrylamide, N,N-dimethylaminopropyl acrylamide, and diacetone acrylamide;
vinyl-based monomers such as vinyl acetate, vinyl chloride, and vinyl benzoate; and
olefin-based monomers such as ethylene and propylene.

A single type of the structural unit derived from the additional monomer may be contained in a copolymer alone, or two or more types thereof may be contained.

The proportion of the structural unit derived from the additional monomer in the polymer A is, for example, 50 mass% or less, preferably 30 mass% or less, and more preferably 10 mass% or less, and may be 5 or 3 mass% or less. The proportion of the structural unit derived from the additional monomer in the copolymer may be 0 mass% or more, 0.5 mass% or more, or 1 mass% or more. That is, the proportion of the structural unit derived from the additional monomer in the polymer A may be from 0 to 50 mass%, from 0 to 30 mass%, from 0 to 10 mass%, from 0.5 to 5 mass%, or from 1 to 3 mass%.

Physical Properties of Polymer A

From the viewpoint of further improving water resistance and adhesiveness, the weight average molecular weight (Mw) of the polymer A is preferably 50000 or more, more preferably 300000 or more, still more preferably 550000 or more, and particularly preferably 600000 or more. The upper limit of the weight average molecular weight of the polymer A is preferably 5000000 or less from the viewpoint of improving film-forming properties and water resistance.

The dispersity (Mw/Mn) of the polymer A calculated using the weight average molecular weight (Mw) and the number average molecular weight (Mn) is preferably 10.0 or less, more preferably 8.0 or less, and still more preferably 6.0 or less. The lower limit of the dispersity is preferably 1, and may be 2 or 3. That is, the dispersity (Mw/Mn) of the polymer A is preferably from 1 to 10.0, more preferably from 2 to 8.0, and still more preferably from 3 to 6.0.

The weight average molecular weight and the number average molecular weight can be calculated by a standard polystyrene conversion method using gel permeation chromatography (GPC).

The glass transition temperature (Tg (°C)) of the polymer A is not particularly limited. However, from the viewpoint that a textile printed product produced using the textile printing ink of the present invention is likely to have excellent texture, the glass transition temperature is preferably 10°C or lower, more preferably 5°C or lower, and even more preferably 3°C or lower. Meanwhile, the lower limit is not particularly limited, but is preferably -50°C or higher, and more preferably -40°C or higher. That is, the Tg of the polymer A is preferably from -50 to 10°C, more preferably from -40 to 5°C, and still more preferably from -40 to 3°C.

The Tg (°C) of the polymer A can be measured by a differential calorimetry method (AST D3418-08), but may be a value converted from the $Tg_A$ (K) determined from the Fox equation represented by the following Formula (1).
[Math. 1]

$$\frac{1}{Tg_A} = \frac{W_1}{Tg_1} + \frac{W_2}{Tg_2} + \frac{W_3}{Tg_3} + \cdots + \frac{W_n}{Tg_n} \qquad (1)$$

[In Formula (1), $Tg_A$ represents the Tg (K) of the polymer A, $Tg_n$ represents the Tg (K) of the homopolymer of each monomer used, and $W_n$ represents the blending proportion (mass%) of each monomer in all monomer components used.]

Method for Producing Polymer A

The polymer A can be produced by polymerizing the above-described monomer b and monomers that are used as necessary including an acid group-containing monomer, a hydroxyl group-containing monomer, a styrene-based

monomer, an alkyl (meth)acrylate ester, and an additional monomer (hereinafter, these monomers are collectively referred to as monomer components). The polymerization method used can be a known polymerization method, and examples thereof include a solution polymerization method, a bulk polymerization method, a suspension polymerization method, and an emulsion polymerization method. Among these, a solution polymerization method or an emulsion polymerization method is preferable. The types, combination, blending proportions, and the like of the preferred monomer components used in each polymerization method are in accordance with the preferred embodiments described above with regard to the monomers for forming the polymer A. Hereinafter, preferable production methods are described in detail, but the production method is not limited thereto.

The solution polymerization method employed can be any method, such as a method in which the monomer components are charged all at once and polymerized, a method in which polymerization is carried out while the monomer components are added dropwise, and a method in which some of the monomer components are charged all at once and polymerization is carried out while the remaining monomer components are added dropwise. When the monomer components are charged all at once and polymerized, it is more preferable to add a polymerization initiator together with the monomer components such that a polymer A having a high molecular weight can be produced. When polymerization is carried out while the monomer components are added dropwise, it is more preferable to add a mixture of the monomer components and the polymerization initiator dropwise in order to maintain the ratio of the monomer components to the polymerization initiator as constant as possible during the polymerization.

Specific examples of the polymerization initiator used in the solution polymerization method include known polymerization initiators, for example, peroxide-based polymerization initiators, such as methyl ethyl ketone peroxide, benzoyl peroxide, dicumyl peroxide, di-t-butyl peroxide, t-butyl hydroperoxide, cumene hydroperoxide, t-butyl peroxyoctoate, t-butyl peroxybenzoate, and lauroyl peroxide; and azo-based polymerization initiators, such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid), and 2,2-azobis(2-methylpropionamidine). A single type of polymerization initiator may be used alone, or two or more types thereof may be used in combination.

The amount of the polymerization initiator used in the solution polymerization method is preferably from 0.01 to 3 parts by mass per 100 parts by mass of the monomer components. When the amount of the polymerization initiator exceeds 3 parts by mass, a polymer A having a desired weight average molecular weight may not be produced.

The solvent used in the solution polymerization method is preferably an organic solvent, and specific examples thereof include aliphatic hydrocarbon-based solvents such as n-hexane and n-heptane; alicyclic hydrocarbon-based solvents such as cyclopentane, cyclohexane, methylcyclohexane, dimethylcyclohexane, trimethylcyclohexane, ethylcyclohexane, diethylcyclohexane, decahydronaphthalene, bicycloheptane, tricyclodecane, hexahydroindenecyclohexane, cyclooctane, α-pinene, terpinolene, and limonene; aromatic hydrocarbon-based solvents such as toluene, xylene, benzene, and solvent naphtha; ester-based solvents such as ethyl acetate and butyl acetate; and ketone-based solvents such as acetone, methyl ethyl ketone, methyl isobutyl ketone, and cyclohexanone. A single type of these solvents may be used alone, or two or more types thereof may be used in combination. The amount of the solvent used may be appropriately determined depending on details such as the reaction conditions and the composition of the monomer components so as to produce the polymer A having desired physical properties. For example, the amount of the solvent is preferably from 10 to 300 parts by mass, more preferably from 20 to 200 parts by mass, and still more preferably from 30 to 100 parts by mass, per 100 parts by mass of the monomer components.

In the solution polymerization method, the reaction conditions such as the reaction temperature and the reaction time are not particularly limited. Specifically, the reaction conditions can be appropriately determined depending on details such as the composition of the monomer components and the properties required for the produced polymer A, but the reaction temperature is, for example, from 0 to 100°C, preferably from 50 to 95°C, and more preferably from 60 to 90°C, and the reaction time is, for example, from 0.5 to 30 hours, preferably from 1 to 20 hours, and more preferably from 3 to 10 hours. The reaction pressure is also not particularly limited, and may be any of normal pressure (atmospheric pressure), reduced pressure, or increased pressure. The polymerization reaction is preferably carried out in an atmosphere of an inert gas such as nitrogen gas.

A preferable example of the emulsion polymerization method is a method in which the monomer components are subjected to emulsion polymerization in an aqueous solvent in the presence of an emulsifier and a polymerization initiator. As the specific means and conditions for carrying out emulsion polymerization, means and techniques in conventionally known emulsion polymerization methods can be appropriately selected and adopted.

Examples of the emulsifier used in the above-described emulsion polymerization include, but are not limited to, a nonionic emulsifier, an anionic emulsifier, a cationic emulsifier, and an amphoteric emulsifier, and a conventionally known emulsifier can be used. A single type of these emulsifiers may be used alone, or two or more types thereof may be used in combination. Among the above emulsifiers, a nonionic emulsifier or an anionic emulsifier is preferable. An emulsifier containing a polymerizable group in the molecule (also referred to as a reactive emulsifier) is also preferable. A structural unit derived from a reactive emulsifier is introduced into the polymer A by using the reactive emulsifier as the emulsifier. Accordingly, the polymer A preferably contains a structural unit derived from a reactive emulsifier. Among the above

emulsifiers, a nonionic emulsifier containing a polymerizable group or an anionic emulsifier containing a polymerizable group is particularly preferable. A polymer emulsifier can also be used as the emulsifier.

Examples of the anionic emulsifier include, but are not limited to, alkylsulfate salts such as ammonium dodecylsulfate and sodium dodecylsulfate; alkylsulfonate salts such as ammonium dodecylsulfonate, sodium dodecylsulfonate, and sodium alkyl diphenyl ether disulfonate; alkylarylsulfonate salts such as ammonium dodecylbenzenesulfonate and sodium dodecylnaphthalenesulfonate; polyoxyethylene alkylsulfonate salts; polyoxyethylene alkyl ether sulfate salts; polyoxyethylene alkyl aryl ether sulfate salts; dialkyl sulfosuccinate salts; arylsulfonic acid-formalin condensates; fatty acid salts such as ammonium laurate and sodium stearate; allyl group-containing sulfate esters or salts thereof, such as bis(polyoxyethylene polycyclic phenyl ether) methacrylate sulfonate salts, propenyl-alkylsulfosuccinate ester salts, (meth)acrylic acid polyoxyethylene sulfonate salts, (meth)acrylic acid polyoxyethylene phosphonate salts, and sulfonate salts of allyloxymethyl alkyloxy polyoxyethylene; sulfate ester salts of allyloxymethyl alkoxyethyl polyoxyethylene; and polyoxyalkylene alkenyl ether sulfate ammonium salts.

Examples of the nonionic emulsifier include, but are not limited to, polyoxyethylene alkyl ethers, polyoxyethylene alkyl aryl ethers, condensates of polyethylene glycol and polypropylene glycol, sorbitan fatty acid esters, polyoxyethylene sorbitan fatty acid esters, fatty acid monoglycerides, condensates of ethylene oxide and aliphatic amine, and polyoxyalkylene alkenyl ethers.

Examples of the polymer emulsifier include, but are not limited to, poly(meth)acrylate salts such as sodium polyacrylate; polyvinyl alcohol; polyvinyl pyrrolidone; polyhydroxyalkyl (meth)acrylates such as polyhydroxyethyl acrylate; and copolymers containing, as a copolymerization component, one or more monomers constituting these polymers.

The term reactive emulsifier refers to an emulsifier having a polymerizable group, a hydrophilic group, and a hydrophobic group, and may have one or two or more polymerizable groups per molecule.

The polymerizable group is preferably a group having an ethylenically unsaturated double bond, and specific examples thereof include a (meth)acryloyl group, a vinyl group, an allyl group, and a styryl group.

Examples of the hydrophilic group include groups known as emulsifiers (surfactants), and preferred examples thereof include anionic groups such as a sulfonate group, a phosphate group, a sulfate ester residue, and a phosphate ester residue; and nonionic groups such as a polyether group and an ester group.

Examples of the hydrophobic group include groups known as emulsifiers (surfactants), and preferred examples thereof include alkyl groups (particularly, an alkyl group having from around 8 to around 40 carbons), aryl group-containing hydrocarbon groups (particularly, a hydrocarbon group having from around 12 to around 40 carbons and having a phenyl group), and a polycyclic phenyl group.

Specific examples of the reactive emulsifier include, but are not limited to,

anionic emulsifiers having a polymerizable group, such as propenyl-alkylsulfosuccinate ester salts, (meth)acrylic acid polyoxyethylene sulfonate salts, (meth)acrylic acid polyoxyethylene phosphonate salts (e.g., trade name: Eleminol RS-30, available from Sanyo Chemical Industries, Ltd.), polyoxyethylene alkyl propenyl phenyl ether sulfonate salts (e.g., trade name: AQUALON HS-10, available from DKS Co., Ltd.), sulfonate salts of allyloxymethylalkyloxy polyoxyethylene (e.g., trade name: AQUALON KH-10, available from DKS Co., Ltd.), polyoxyethylene styrenated ammonium propenyl phenyl ether sulfate (e.g., trade name: AQUALON AR-10, available from DKS Co., Ltd.), sulfonate salts of allyloxymethyl nonylphenoxyethyl hydroxypolyoxyethylene (e.g., trade name: ADEKA REASOAP SE-10, available from ADEKA CORPORATION), allyloxymethyl alkoxyethyl hydroxypolyoxyethylene sulfonate ester salts (e.g., trade name: ADEKA REASOAP SR-10, SR-30, available from ADEKA CORPORATION), and bis(polyoxyethylene polycyclic phenyl ether) methacrylated sulfonate salts (e.g., trade name: Antox MS-60, available from Nippon Nyukazai Co., Ltd.); and

nonionic emulsifiers having a polymerizable group, such as polyoxyethylene styrenated propenyl phenyl ether (e.g., trade name: AQUALON AN-10, available from DKS Co., Ltd.), allyloxymethyl alkoxyethyl hydroxypolyoxyethylenes (e.g., trade name: ADEKA REASOAP ER-20, available from ADEKA CORPORATION), polyoxyethylene alkyl propenyl phenyl ethers (e.g., trade name: AQUALON RN-20, available from DKS Co., Ltd.), and allyloxymethyl nonylphenoxyethyl hydroxypolyoxyethylenes (e.g., trade name: ADEKA REASOAP NE-10, available from ADEKA CORPORATION).

The amount of the emulsifier used is not limited, but the amount is, for example, preferably 10 parts by mass or less, more preferably 7 parts by mass or less, and even more preferably 5 parts by mass or less, and is preferably 0.1 parts by mass or more, more preferably 0.5 parts by mass or more, and even more preferably 1 part by mass or more, per 100 parts by mass of the monomer components. That is, the amount of the emulsifier used is preferably from 0.1 to 10 parts by mass, more preferably from 0.5 to 7 parts by mass, and still more preferably from 1 to 5 parts by mass, per 100 parts by mass of the monomer components.

If necessary, a protective colloid may be used alone or in combination with the emulsifier.

The polymerization initiator that is used during emulsion polymerization is not limited, and examples thereof

include, but are not limited to, azo-based polymerization initiators, such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid), and 2,2-azobis(2-methylpropionamidine); persulfate salts such as ammonium persulfate and potassium persulfate; and peroxide-based polymerization initiators such as hydrogen peroxide, benzoyl peroxide, p-chlorobenzoyl peroxide, lauroyl peroxide, and ammonium peroxide. A single type of these polymerization initiators may be used alone, or two or more types thereof may be used in combination.

The amount of the polymerization initiator used in the emulsion polymerization is preferably from 0.01 to 3 parts by mass, more preferably from 0.05 to 2 parts by mass, and still more preferably from 0.1 to 1 part by mass, per 100 parts by mass of the monomer components. When a peroxide-based polymerization initiator is used as the polymerization initiator, if an increase in polymerization rate or a decrease in reaction temperature is necessary, a reducing agent such as a soluble sulfite salt or ascorbic acid, or a metal compound that generates heavy metal ions in water, such as ferrous sulfate, may be used as a redox-based initiator in combination with the peroxide-based polymerization initiator.

The reaction temperature during the emulsion polymerization can be appropriately set in consideration of details such as the weight average molecular weight of the polymer A to be produced, the blending proportions of the monomer components, and the type of polymerization initiator, and the reaction temperature is, for example, from 0 to 100°C, preferably from 50 to 95°C, and more preferably from 60 to 90°C, and the reaction time is, for example, from 0.5 to 30 hours, preferably from 1 to 20 hours, and more preferably from 3 to 10 hours. The reaction pressure is also not particularly limited, and may be any of normal pressure (atmospheric pressure), reduced pressure, or increased pressure. The polymerization reaction is preferably carried out in an atmosphere of an inert gas such as nitrogen gas.

Examples of the aqueous solvent used during the emulsion polymerization include water and a mixed solvent of water and a water-soluble organic solvent. The content of water in the aqueous solvent is preferably from 10 to 100 mass%, more preferably 25 mass% or more, still more preferably 60 mass% or more, and particularly preferably 90 mass% or more. The balance is preferably a water-soluble organic solvent.

Examples of the water-soluble organic solvent include:

lower alcohols such as methyl alcohol, ethyl alcohol, n-propyl alcohol, isopropyl alcohol, n-butyl alcohol, and tert-butyl alcohol;
dihydric alcohols (preferably glycols) such as propylene glycol, 1,3-propanediol, dipropylene glycol, tripropylene glycol, ethylene glycol, diethylene glycol, triethylene glycol, and tetraethylene glycol;
trihydric alcohols such as glycerin;
ethers of monoethylene glycol, such as monoethylene glycol monomethyl ether, monoethylene glycol monoethyl ether, monoethylene glycol monopropyl ether, monoethylene glycol monoisopropyl ether, monoethylene glycol monobutyl ether, and monoethylene glycol monoisobutyl ether;
ethers of monopropylene glycol, such as monopropylene glycol monomethyl ether, monopropylene glycol monoethyl ether, monopropylene glycol monopropyl ether, monopropylene glycol monoisopropyl ether, monopropylene glycol monobutyl ether, and monopropylene glycol monoisobutyl ether;
ethers of polyethylene glycol, such as monomethyl ethers of polyethylene glycol (number of moles of added EO = from 1 to 10, preferably from 1 to 4), monoethyl ethers of polyethylene glycol (number of moles of added EO = from 1 to 10, preferably from 1 to 4), monopropyl ethers of polyethylene glycol (number of moles of added EO = from 1 to 10, preferably from 1 to 4), monoisopropyl ethers of polyethylene glycol (number of moles of added EO = from 1 to 10, preferably from 1 to 4), monobutyl ethers of polyethylene glycol (number of moles of added EO = from 1 to 10, preferably from 1 to 4), and monoisobutyl ethers of polyethylene glycol (number of moles of added EO = from 1 to 10, preferably from 1 to 4);
ethers of polypropylene glycol, such as monomethyl ethers of polypropylene glycol (number of moles of added EO = from 1 to 10, preferably from 1 to 4), monoethyl ethers of polypropylene glycol (number of moles of added EO = from 1 to 10, preferably from 1 to 4), monopropyl ethers of polypropylene glycol (number of moles of added EO = from 1 to 10, preferably from 1 to 4), monoisopropyl ethers of polypropylene glycol (number of moles of added EO = from 1 to 10, preferably from 1 to 4), monobutyl ethers of polypropylene glycol (number of moles of added EO = from 1 to 10, preferably from 1 to 4), and monoisobutyl ethers of polypropylene glycol (number of moles of added EO = from 1 to 10, preferably from 1 to 4);
heterocyclic compounds such as 2-pyrrolidone and N-methyl-2-pyrrolidone; and
ketones such as acetone and methyl ethyl ketone.

A single type of these water-soluble organic solvents may be used alone, or two or more types thereof may be used in combination.

Among these, glycols, ethers of polyethylene glycol (number of moles of added EO = from 1 to 10, preferably from 1 to 4), and 2-pyrrolidone are preferable, propylene glycol, glycerin, diethylene glycol, triethylene glycol, diethylene glycol monoisopropyl ether, diethylene glycol monoisobutyl ether, monobutyl ethers of polyethylene glycol (number of moles of

added EO = from 1 to 4), and 2-pyrrolidone are more preferable, and propylene glycol, triethylene glycol, monobutyl ethers of polyethylene glycol (number of moles of added EO = from 1 to 4), and 2-pyrrolidone are even more preferable.

The amount of the aqueous solvent used in the emulsion polymerization is not limited, but is preferably from 20 to 300 parts by mass, more preferably from 30 to 200 parts by mass, and even more preferably from 40 to 150 parts by mass, per 100 parts by mass of the monomer components.

Specific examples of the polymerization method in the emulsion polymerization include a polymerization method involving dropwise addition of the monomers, a polymerization method involving dropwise addition of a pre-emulsion, a seed polymerization method, and a multistage polymerization method.

As necessary, an additive such as a pH buffer, a chelating agent, or a chain transfer agent such as a compound having a thiol group, such as tert-dodecylmercaptan, may be added in an appropriate amount in the reaction system of the emulsion polymerization. The amount of the additive varies depending on the type thereof and thus cannot be determined unconditionally, but is usually preferably from 0.01 to 5 parts by mass, and more preferably from 0.1 to 3 parts by mass, per 100 parts by mass of the monomer components.

Such an emulsion polymerization method produces an emulsion in which the produced polymer A is dispersed in the form of emulsion particles in an aqueous solvent. When the polymer A is contained in the textile printing ink of the present invention, the polymer A is preferably added in the form of an emulsion, i.e., the polymer A is preferably contained in the form of emulsion particles in the textile printing ink of the present invention. The present invention also encompasses an emulsion for the textile printing ink, and use of the emulsion in a textile printing ink. Hereinafter, the emulsion for the textile printing ink of the present invention is described in detail.

Emulsion

The emulsion particles contained in the emulsion for the textile printing ink of the present invention are emulsion particles formed of the polymer A. That is, the emulsion for the textile printing ink of the present invention contains the polymer A. The composition, physical properties, and the like of the polymer A constituting the emulsion particles are as described above, and preferred embodiments thereof are also the same. From the viewpoint of handleability, the content of the emulsion particles in the emulsion of the present invention is preferably from 10 to 80 mass%, more preferably from 20 to 70 mass%, and even more preferably from 30 to 65 mass%.

The shape of the emulsion particles is not particularly limited, but is usually spherical. The shape can be measured using a transmission electron microscope or a scanning electron microscope. The emulsion particles may have a single-layer structure or a multilayer structure (e.g., a core-shell structure).

The average particle size (volume-based) of the emulsion particles is preferably 50 nm or more, more preferably 100 nm or more, and even more preferably 150 nm or more, and is preferably 500 nm or less, more preferably 350 nm or less, and even more preferably 300 nm or less.

That is, the average particle size of the emulsion particles is preferably from 50 to 500 nm, more preferably from 100 to 350 nm, and even more preferably from 150 to 300 nm. When the average particle size is adjusted to fall within the above range, the emulsion particles can be easily blended at a high concentration while the viscosity of the ink is maintained in an appropriate range. The average particle size (volume-based) of the emulsion particles employed may be a cumulant average particle size measured by a dynamic light scattering method as described in the Examples below.

The aqueous solvent serving as a dispersion medium of the emulsion particles may be a solvent derived from the aqueous solvent used in the emulsion polymerization, or may be a solvent added separately to the reaction liquid of the emulsion polymerization or to the isolated polymer A. Examples of the aqueous solvent include the same aqueous solvents as those described as the solvent used in the emulsion polymerization method.

From the viewpoint of handleability, the content of the aqueous solvent in the emulsion of the present invention is preferably from 30 to 900 parts by mass, more preferably from 50 to 400 parts by mass, and even more preferably from 70 to 250 parts by mass, per 100 parts by mass of the emulsion particles.

The emulsion particles are preferably dispersed and stabilized with an emulsifier (surfactant). Examples of the emulsifier include those described as the emulsifier used in the emulsion polymerization method, and preferred embodiments thereof are also the same. The emulsion produced by the emulsion polymerization method usually contains the emulsifier used for emulsification, and the emulsion may be used as is as an emulsion for a textile printing ink.

The emulsion may contain an additive such as a pH buffer, a chelating agent, or a chain transfer agent such as a compound having a thiol group, such as tert-dodecylmercaptan. The amount of the additive varies depending on the type thereof and thus cannot be determined unconditionally, but is usually preferably from 0.01 to 5 parts by mass, and more preferably from 0.1 to 3 parts by mass, per 100 parts by mass of the emulsion particles.

The textile printing ink of the present invention contains the polymer A (preferably the emulsion particles). The composition, physical properties, and the like of the polymer A and the emulsion particles contained in the textile printing ink of the present invention are as described above, and preferred embodiments thereof are also the same.

The content of the polymer A (preferably the emulsion particles) in the textile printing ink may be set depending on

the characteristics required for the textile printing ink, and is preferably 1 mass% or more, more preferably 5 mass% or more, and even more preferably 10 mass% or more, and is preferably 30 mass% or less, and more preferably 20 mass% or less. That is, the content of the polymer A (preferably the emulsion particles) in the textile printing ink is preferably from 1 to 30 mass%, more preferably from 5 to 30 mass%, and still more preferably from 10 to 20 mass%.

The content of the polymer A (preferably the emulsion particles) in the solid content (non-volatile content) of the textile printing ink is preferably 4 mass% or more, more preferably 20 mass% or more, even more preferably 30 mass% or more, and yet even more preferably 40 mass% or more, and may be 100 mass%, and is preferably 95 mass% or less, more preferably 90 mass% or less, and even more preferably 85 mass% or less. That is, the content of the polymer A (preferably the emulsion particles) in the solid content of the textile printing ink is preferably from 4 to 100 mass%, more preferably from 20 to 95 mass%, even more preferably from 30 to 90 mass%, and still more preferably from 40 to 85 mass%. The fastness to wet rubbing can be further enhanced by adjusting the content of the polymer A (preferably the emulsion particles) to fall within the above range. In the present specification, the solid content (non-volatile component) refers to the component excluding the solvent.

Crosslinking Agent

The textile printing ink of the present invention may further contain a crosslinking agent. It is presumed that using a crosslinking agent results in the formation of a crosslinked structure due to interaction or a chemical reaction with the component contained in the ink of the present invention, for example, the polymer A, a pigment, or a pigment dispersant, whereby a tough coating film can be formed, and thus fastness to rubbing and fastness to washing are further improved.

Examples of the crosslinking agent include an isocyanate compound, an epoxy compound, a melamine compound, a metal chelate compound, an aziridine compound, a mercapto compound, and an oxazoline compound, and an oxazoline compound is preferable. A single type of the crosslinking agent may be used alone, or two or more types thereof may be used in combination.

The oxazoline compound as the crosslinking agent means a compound having two or more oxazoline groups in the molecule. Examples of the oxazoline compound include, but are not limited to, 2,2'-bis(2-oxazoline), 2,2'-methylene-bis(2-oxazoline), 2,2'-ethylene-bis(2-oxazoline), 2,2'-trimethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-ethylene-bis(4,4'-dimethyl-2-oxazoline), 2,2'-p-phenylene-bis(2-oxazoline), 2,2'-m-phenylene-bis(2-oxazoline), 2,2'-m-phenylene-bis(4,4'-dimethyl-2-oxazoline), bis(2-oxazolinylcyclohexane) sulfide, bis(2-oxazolinylnorbornane) sulfide, and oxazoline group-containing polymers.

Among the above oxazoline compounds, a water-soluble oxazoline compound is preferable, and an oxazoline group-containing polymer is preferable, from the viewpoint of excellent crosslinking performance. The oxazoline group-containing polymer can be produced by a conventionally known production method. Examples of the production method include a method of polymerizing one type or two or more types of addition-polymerizable oxazolines or monomer components containing an addition-polymerizable oxazoline, and a monomer copolymerizable with the addition-polymerizable oxazoline. The copolymerizable monomer is preferably a monomer that is copolymerizable with an addition-polymerizable oxazoline without having a functional group that reacts with an oxazoline group. For example, the monomer components can include a monomer that does not have a functional group that reacts with an oxazoline group. Examples thereof include (meth)acrylic monomers such as the monomer b and alkyl (meth)acrylate esters; styrene-based monomers such as styrene, $\alpha$-methylstyrene, and chloromethylstyrene; vinyl-based monomers such as vinyl acetate, vinyl chloride, and vinyl benzoate; acrylonitrile; (meth)acrylamide-based monomers such as acrylamide; and olefin-based monomers such as ethylene and propylene.

Examples of the addition-polymerizable oxazoline include compounds having a polymerizable unsaturated group and an oxazoline group in the molecule, such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Among the oxazoline group-containing polymers, a water-soluble oxazoline group-containing polymer is preferable, and can be produced by the same method as the method for producing the oxazoline group-containing polymer. Examples of the water-soluble oxazoline group-containing polymer include polymers that have an acrylic polymer, an acrylic-styrene-based polymer, or the like as a main chain and contain an oxazoline group in a side chain.

The oxazoline group-containing polymer to be used may be a commercially available product. Examples of the commercially available product include water-soluble polymers such as trade name: EPOCROS WS-500 and EPOCROS WS-700 available from Nippon Shokubai Co., Ltd., and emulsion-type polymers such as EPOCROS K-2010, EPOCROS K-2020, and EPOCROS K-2030 available from Nippon Shokubai Co., Ltd. Among these, water-soluble polymers such as trade name: EPOCROS WS-500 and EPOCROS WS-700 available from Nippon Shokubai Co., Ltd. are preferable.

The content of the crosslinking agent (preferably, the oxazoline compound) is preferably from 0.1 to 15 parts by mass, more preferably from 0.5 to 10 parts by mass, and still more preferably from 1 to 8 parts by mass, per 100 parts by

mass of the polymer A. When the amount of the crosslinking agent is within the above range, sufficient crosslinkability can be exhibited, and fastness to rubbing and/or fastness to washing (particularly, fastness to washing) is further improved.

Pigment

The textile printing ink of the present invention may further contain a pigment. When the textile printing ink contains a pigment, the textile printing ink can be formed into a white ink or a colored ink. When the textile printing ink of the present invention is used as a clear ink, it is not necessary for the textile printing ink to contain a pigment.
Examples of the pigment include organic pigments and inorganic pigments, and these pigments may be used alone or in combination of two or more types thereof. If necessary, the pigments may be used in combination with an extender pigment.
Examples of the organic pigment include azo pigments such as benzidine and Hansa yellow; diazo pigments; azomethine pigments; methine pigments; anthraquinone pigments; phthalocyanine pigments such as phthalocyanine blue; perinone pigments; perylene pigments; diketopyrrolopyrrole pigments; thioindigo pigments; iminoisoindoline pigments; isoindolinone pigments such as iminoisoindolinone; dioxazine pigments; quinacridone pigments such as Quinacridone Red and Quinacridone Violet; flavanthrone pigments; indanthrone pigments; anthrapyrimidine pigments; carbazole pigments; Monoarylide Yellow; Diarylide Yellow; Benzimidazolone Yellow; Tolyl Orange; Naphthol Orange; and quinophthalone pigments.
The hue is not particularly limited, and any chromatic pigment such as yellow, magenta, cyan, blue, red, orange, and green can be used. Specific examples thereof include products of product numbers such as C.I. Pigment Yellow, C.I. Pigment Red, C.I. Pigment Orange, C.I. Pigment Violet, C.I. Pigment Blue, and C.I. Pigment Green.
Examples of the inorganic pigment include titanium dioxide, antimony trioxide, zinc oxide such as zinc white, lithopone, lead white, red iron oxide, black iron oxide, chromium oxide green, carbon black, chrome yellow, molybdenum red, ferric ferrocyanide (Prussian blue), ultramarine, and lead chromate. Examples of the inorganic pigment also include pigments having a flat shape, such as mica, clay, aluminum powder, talc, and aluminum silicate; and extender pigments such as calcium carbonate, magnesium hydroxide, aluminum hydroxide, barium sulfate, and magnesium carbonate. Examples of carbon black include furnace black, thermal lamp black, acetylene black, and channel black.
Among the inorganic pigments, preferable examples of the white pigment include titanium dioxide, antimony trioxide, zinc oxide such as zinc white, lithopone, lead white, calcium carbonate, magnesium hydroxide, aluminum hydroxide, barium sulfate, magnesium carbonate, clay, talc, and aluminum silicate. Among these, titanium dioxide is preferable from the viewpoint of having a high refractive index and excellent concealing properties. Among the titanium dioxide, titanium dioxide having a rutile crystal structure is preferable.
Preferable examples of coloring pigments include the above-mentioned organic pigments, red iron oxide, black iron oxide, chromium oxide green, carbon black, chrome yellow, molybdenum red, ferric ferrocyanide (Prussian blue), ultramarine, and lead chromate.
From the viewpoints of dispersion stability and color development or concealment properties, the average particle size (volume-based) of the pigment is preferably from 10 to 1000 nm, and more preferably from 20 to 500 nm.
In the case of a white pigment, from the viewpoint of excellent concealment properties, the average particle size (volume-based) is preferably from 100 to 500 nm. The lower limit of the average particle size is more preferably 150 nm or more, and even more preferably 200 nm or more, and the upper limit is more preferably 450 nm or less, and even more preferably 400 nm or less. That is, the average particle size (volume-based) of the white pigment is preferably from 100 to 500 nm, more preferably from 150 to 450 nm, and still more preferably from 200 to 400 nm.
In the case of a coloring pigment, in particular, from the viewpoint of color development performance, the average particle size (volume-based) is preferably from 20 to 200 nm. The lower limit is more preferably 40 nm or more, and even more preferably 50 nm or more, and the upper limit is more preferably 150 nm or less, and even more preferably 100 nm or less. That is, the average particle size (volume-based) of the coloring pigment is preferably from 20 to 200 nm, more preferably from 40 to 150 nm, and still more preferably from 50 to 100 nm.
The average particle size of the pigment refers to the average particle size in the textile printing ink of the present invention. The average particle size of the pigment can be measured using a laser diffraction scattering-type particle size distribution meter or by a dynamic light scattering method. For example, a cumulant average particle size measured by a dynamic light scattering method as shown in the below-described Examples can be adopted. However, when measurement by the dynamic light scattering method is difficult as in the case of a black pigment or the like, the 50% particle size in a volume-based particle size distribution obtained by measuring with a laser diffraction scattering-type particle size distribution meter can be adopted as the average particle size.
The pigment is preferably dispersion-stabilized with a dispersant in the textile printing ink of the present invention. Examples of the dispersant include poly(meth)acrylic acid (salts) such as poly(meth)acrylic acid and poly(meth)acrylate salts; copolymers of (meth)acrylic acid (salt) and one type or two or more types of the monomer components other than the (meth)acrylic acid (salt), such as alkyl (meth)acrylate ester, (meth)acrylamide, styrene, maleic acid, maleic anhydride,

maleate ester, and vinyl acetate; polyvinyl alcohol; and polyvinylpyrrolidone.

When the textile printing ink of the present invention contains a pigment, the content of the pigment in the solid content of the textile printing ink is preferably from 5 to 80 mass%, and more preferably from 10 to 75 mass%.

In particular, when the pigment is a white pigment, the content of the white pigment in the solid content of the textile printing ink is preferably from 20 to 80 mass%, and more preferably from 35 to 65 mass%. When the pigment is an organic pigment, the content of the organic pigment in the solid content of the textile printing ink is preferably from 5 to 40 mass%, and more preferably from 10 to 30 mass%.

Solvent

The textile printing ink of the present invention preferably further contains a solvent. The solvent acts as a diluent to adjust the viscosity of the textile printing ink. As the solvent, an organic solvent or an aqueous solvent can be suitably used. Hereinafter, a textile printing ink containing, as the solvent, an organic solvent as a main component may be referred to as a solvent-based textile printing ink, and a textile printing ink containing, as the solvent, an aqueous solvent as a main component may be referred to as an aqueous textile printing ink. From the viewpoint of reducing the environmental load, the textile printing ink of the present invention is preferably an aqueous textile printing ink. The textile printing ink of the present invention may contain one type of solvent alone, or may contain two or more types of solvents.

The content of the organic solvent in the solvent contained in the solvent-based textile printing ink is preferably 70 mass% or more, more preferably 85 mass% or more, and still more preferably 95 or 98 mass% or more, and may be 100 mass%.

The content of the aqueous solvent in the solvent contained in the aqueous textile printing ink is preferably 70 mass% or more, more preferably 85 mass% or more, and still more preferably 95 or 98 mass% or more, and may be 100 mass%.

The organic solvent may be a solvent derived from the organic solvent used during solution polymerization, or may be a solvent separately added to the reaction liquid of the solution polymerization or to the isolated polymer A. The aqueous solvent may be a solvent derived from the aqueous solvent used during emulsion polymerization, or may be a solvent separately added to the reaction liquid of the emulsion polymerization or to the isolated polymer A.

Examples of the organic solvent include the same organic solvents as those described as the solvent used in the solution polymerization method.

Examples of the aqueous solvent include the same aqueous solvents as those described as the solvent used in the emulsion polymerization method.

In a case where the textile printing ink of the present invention is an aqueous textile printing ink, from the viewpoint of enhancing moisture retention and compatibility with the polymer A, the aqueous solvent contained in the aqueous textile printing ink preferably contains a water-soluble organic solvent together with water. The content of the water-soluble organic solvent in the aqueous solvent is preferably from 10 to 40 mass%, and more preferably from 15 to 30 mass%.

In particular, from the viewpoint of further enhancing moisture retention, the water-soluble organic solvent is preferably a water-soluble organic solvent having a boiling point of 150°C or higher, more preferably a water-soluble organic solvent having a boiling point of 180°C or higher, and still more preferably a water-soluble organic solvent having a boiling point of 200°C or higher. The water-soluble organic solvent having a boiling point of 150°C or higher is preferably a glycol or glycerin having a boiling point of 150°C or higher, and specific examples thereof include propylene glycol, diethylene glycol, triethylene glycol, and glycerin. The content of the water-soluble organic solvent that further enhances moisture retention is preferably from 10 to 50 parts by mass, and more preferably from 15 to 40 parts by mass, per 100 parts by mass of water in the aqueous solvent.

From the viewpoint of further enhancing compatibility with the polymer A, the water-soluble organic solvent is preferably a water-soluble organic solvent having a hydrophobic group and a hydroxyl group. Examples of the hydrophobic group include monovalent hydrocarbon groups having 3 or more carbons, and the hydrophobic group is preferably a monovalent hydrocarbon group having from 3 to 8 carbons, more preferably an alkyl group having from 3 to 8 carbons, and still more preferably an alkyl group having 3 or 4 carbons. The water-soluble organic solvent having a hydrophobic group and a hydroxyl group is preferably at least one selected from the group consisting of mono $C_{3-8}$ (preferably $C_{3-4}$) alkyl ethers of polyethylene glycol (number of moles of added EO = from 1 to 10, preferably from 1 to 4), and mono $C_{3-8}$ (preferably $C_{3-4}$) alkyl ethers of polypropylene glycol (number of moles of added EO = from 1 to 10, preferably from 1 to 4), and is preferably at least one selected from the group consisting of diethylene glycol monoisopropyl ether, diethylene glycol monoisobutyl ether, and monobutyl ethers of polyethylene glycol (number of moles of added EO = from 1 to 4). The content of the water-soluble organic solvent that further enhances compatibility is preferably from 1 to 15 parts by mass, and more preferably from 2 to 8 parts by mass, per 100 parts by mass of water in the aqueous solvent.

The content of the solvent in the textile printing ink may be set depending on the desired viscosity of the textile printing ink, and is not particularly limited. However, from the viewpoint of handleability, the content of the solvent is, for example, from 40 to 90 mass%, preferably from 50 to 88 mass%, and more preferably from 55 to 85 mass%.

Additional Additive

The textile printing ink of the present invention may further contain an additive as long as the object of the present invention is not impaired. For example, the textile printing ink may contain an appropriate amount of an additive such as a surfactant, a dispersant, a leveling agent, an ultraviolet absorber, an ultraviolet stabilizer, a thickener, a wetting agent, a plasticizer, a stabilizer, an antifoaming agent, a dye, an antioxidant, a crosslinking promoter, a PH adjuster, or a preservative. The leveling agent to be used is preferably, for example, an acetylene glycol-based, silicone-based, or fluorine-based surfactant. In particular, a polyether-modified silicone compound is preferable.

When the additive is added, the content thereof is not particularly limited, but is preferably 2 mass% or less, and preferably 1 mass% or less in the textile printing ink of the present invention. In order to exhibit the effect from the addition thereof, the content of the additive is preferably 0.01 mass% or more, and more preferably 0.05 mass% or more. That is, the content of the additive is preferably from 0.01 to 2 mass%, and more preferably from 0.05 to 1 mass% in the textile printing ink of the present invention.

As long as the object of the present invention is not impaired, the textile printing ink of the present invention may further contain a binder resin other than the polymer A, such as a vinyl-based resin, a (meth)acrylic resin other than the polymer A, an olefin-based resin, a urethane-based resin, a fluorine-based resin, a silicone-based resin, an epoxy resin, a phenoxy resin, a phenol resin, or a xylene resin. The polymer A is also included in the binder resin in the textile printing ink. The textile printing ink of the present invention may contain one type of binder resin other than the polymer A, or may contain two or more types of binder resins other than the polymer A.

Among the binder resins other than the polymer A, a (meth)acrylic resin other than the polymer A (hereinafter, may be referred to as "(meth)acrylic resin B") is preferable.

From the viewpoint of achieving a more excellent texture of the produced textile printed product, the (meth)acrylic resin B preferably contains a structural unit derived from a low Tg alkyl (meth)acrylate ester. Examples of the low Tg alkyl (meth)acrylate ester are the same as those described above, and preferred embodiments thereof are also the same. The proportion of the structural unit derived from the low Tg alkyl (meth)acrylate ester in the (meth)acrylic resin B is preferably from 20 to 90 mass%, more preferably from 30 to 75 mass%, and still more preferably from 40 to 65 mass%.

From the viewpoint of further improving fastness to wet rubbing and fastness to washing (particularly fastness to washing), the (meth)acrylic resin B preferably further contains a structural unit derived from a styrene-based monomer and/or a $C_{1-5}$ alkyl methacrylate ester, and more preferably contains a structural unit derived from a styrene-based monomer. Examples of the styrene-based monomer and the $C_{1-5}$ alkyl methacrylate ester are the same as those described above, and preferred embodiments thereof are also the same. The total proportion of the structural units derived from the styrene-based monomer and the $C_{1-5}$ alkyl methacrylate ester (in particular, the proportion of the structural unit derived from the styrene-based monomer) in the (meth)acrylic resin B is preferably from 10 to 70 mass%, more preferably from 20 to 60 mass%, and even more preferably from 30 to 50 mass%.

The (meth)acrylic resin B may further have a structural unit derived from an acid group-containing monomer. Examples of the acid group-containing monomer are the same as those described above, and preferred embodiments thereof are also the same. The proportion of the structural unit derived from the acid group-containing monomer in the (meth)acrylic resin B is preferably from 0.1 to 10 mass%, more preferably from 0.5 to 8 mass%, and still more preferably from 1.0 to 5 mass%.

The (meth)acrylic resin B may further have a structural unit derived from a hydroxyl group-containing monomer. Examples of the hydroxyl group-containing monomer are the same as those described above, and preferred embodiments thereof are also the same. The proportion of the structural unit derived from the hydroxyl group-containing monomer in the (meth)acrylic resin B is preferably from 0.1 to 10 mass%, more preferably from 0.3 to 5 mass%, and still more preferably from 0.5 to 3 mass%.

The total content of the structural units derived from the low Tg alkyl (meth)acrylate ester, the styrene-based monomer, the $C_{1-5}$ alkyl methacrylate ester, the acid group-containing monomer, and the hydroxyl group-containing monomer in the (meth)acrylic resin B is preferably from 50 to 100 mass%, more preferably 80 mass% or more, and still more preferably 95 mass% or more.

The content of the polymer A is, for example, 40 mass% or more, preferably 50 mass% or more, more preferably 60 mass% or more, even more preferably 80 mass% or more, still more preferably 90 mass% or more, and particularly preferably 95 mass% or more, and may be 100 mass%, per 100 mass% of the binder resin contained in the textile printing ink of the present invention.

The total content of the polymer A and the (meth)acrylic resin B is, for example, from 50 to 100 mass%, preferably 80 mass% or more, more preferably 90 mass% or more, and still more preferably 95 mass% or more, per 100 mass% of the binder resin contained in the textile printing ink of the present invention.

As described below, the textile printing ink of the present invention can be particularly suitably used for inkjet textile printing, i.e., the textile printing ink of the present invention is preferably for use in inkjet textile printing.

Method for Producing Textile Printing Ink

The method for producing the textile printing ink of the present invention is not particularly limited, and the textile printing ink may be prepared from the polymer A or an emulsion containing the polymer A. For example, the textile printing ink can be produced by mixing the polymer A with optionally used components including a solvent, a crosslinking agent, a pigment, a binder resin other than the polymer A, and an additional additive. A preferred embodiment, i.e., an example of a method for producing an aqueous textile printing ink is described below, but the production method is not limited thereto.
Firstly, an emulsion containing the polymer A and, if necessary, a pigment dispersion and a dispersion of a binder resin other than the polymer A are provided. The polymer A can be contained in the textile printing ink as emulsion particles by using the emulsion containing the polymer A. The emulsion containing the polymer A to be used can be the emulsion described above as an emulsion for the textile printing ink. The emulsion can be produced by a conventionally known emulsion polymerization method as described above.
The dispersion of the binder resin other than the polymer A is preferably an emulsion in which the binder resin other than the polymer A is dispersed as emulsion particles in an aqueous solvent. The emulsion to be used can be an emulsion that is similar to the emulsion of the polymer A with the exception of a change in the composition of the resin.
The pigment dispersion is preferably prepared by dispersing a pigment in an aqueous solvent. The pigment dispersion can be produced, for example, by mixing a pigment and a dispersant in an aqueous solvent such as water and implementing a dispersion treatment using a bead mill or the like. As the dispersant, the same dispersant as described above can be used.
The content of the pigment in the pigment dispersion is not particularly limited, but is preferably from 5 to 65 mass% per 100 mass% of the pigment dispersion. **In** particular, when the pigment is a white pigment, the content of the white pigment in the pigment dispersion is preferably from 20 to 65 mass% and more preferably from 30 to 60 mass%. When the pigment is an organic pigment, the content of the organic pigment in the pigment dispersion is preferably from 5 to 40 mass%, and more preferably from 8 to 30 mass%.
Next, the emulsion is mixed with optional components including a pigment dispersion, a dispersion of a binder resin other than the polymer A, a solvent, a crosslinking agent, and an additional additive. In the mixing, the compounds of the crosslinking agent and the additional additive may be used as they are, or may be added in the form of a solution diluted with a solvent or the like. The method and order of mixing the above components are not particularly limited. After the mixing, centrifugation, filtration through a filter, or the like may be carried out as necessary.

Textile Printed Product

The present invention also includes a fabric printed with the above textile printing ink. The composition, physical properties, and the like of the textile printing ink used for printing the fabric are as described above, and preferred embodiments thereof are also the same. Hereinafter, the fabric printed with the textile printing ink may be referred to as a textile printed product.
The term fabric as used herein includes all textile products such as cloth and woven fabric in which natural fibers and/or synthetic fibers are used as the original yarn. Examples of the fabric include woven fabrics, nonwoven fabrics, and knitted fabrics. The fibers constituting the fabric are also not particularly limited, and examples thereof include natural fibers, chemical fibers, and mixtures thereof.
Preferable examples of the natural fibers include silk, cotton, and wool. Examples of the chemical fibers include synthetic fibers, recycled fibers, and a semi-synthetic fiber. Preferable examples of the synthetic fibers include polyester fibers, nylon fibers, acrylic fibers, polyurethane fibers, polyethylene fibers, polypropylene fibers, and vinylon fibers. Preferable examples of the recycled fibers include rayon. Preferable examples of the semi-synthetic fibers include acetate and triacetate. Among these, a fabric containing at least one of cotton, polyester fibers, or polypropylene fibers is preferable.
The present invention also includes a method for textile printing using the above-described textile printing ink (i.e., an ink containing the polymer A). The term "textile printing" refers to printing an ink onto a fabric. That is, the present invention also includes a method for producing a printed fabric (textile printed product) in which the above-described textile printing ink (i.e., an ink containing the polymer A) is printed onto a fabric. The textile printing method, the textile printing ink used in the method for producing a textile printed product, and the composition, physical properties, and the like of the polymer A contained in the textile printing ink are as described above, and preferred embodiments thereof are also the same.
According to the present invention, the method for printing the textile printing ink onto a fabric is not particularly limited, and a conventionally known method can be used with the exception that the textile printing ink contains the polymer A or an emulsion containing the polymer A. A specific printing method to be used can be a known printing method such as an inkjet method or a screen printing method, but the inkjet method is preferable from the viewpoints of resource savings, energy savings, not requiring the formation of a plate, and easily realizing high definition printing. That is, a method in which

the textile printing ink of the present invention is printed onto a fabric by an inkjet method is preferably used.

The textile printed product can be produced, for example, by a production method including an image forming step of forming an image by directly adhering the textile printing ink of the present invention to a fabric using an inkjet printer. A transfer textile printing method using the textile printing ink of the present invention can also be used. The production of a textile printed product by the transfer textile printing method includes, for example, the production by a method including a transfer paper production step in which the textile printing ink of the present invention is ejected onto a transfer paper substrate by an inkjet printer and dried if necessary to thereby produce a transfer paper on which an image is formed; a transfer step in which the transfer paper produced in the transfer paper production step is superposed on a fabric, and the image formed on the transfer paper is transferred to the fabric by heating and/or pressing; and a peeling step in which the transfer paper is peeled from the fabric after the image is transferred in the transfer step.

The inkjet printer used in the above-mentioned image forming step and in the transfer paper production step is not particularly limited, and a conventionally known inkjet printer can be used. The inkjet printer may be of any type such as a piezo type, a thermal type, or a charge control type (continuous ejection type), and a piezo type inkjet printer is particularly preferable. When the piezo-type inkjet printer is used, conditions for ejecting the ink are not particularly limited. The conditions thereof may be appropriately selected depending on details such as the properties of the ink of the present invention, the type of fabric, and the type of image to be printed. The viscosity of the textile printing ink is preferably in a range of from 2 to 20 mPa/s, and more preferably in a range of from 2 to 10 mPa/s. The surface tension of the ink is preferably in a range of from 25 to 45 mN/m.

In the image forming step and the transfer paper production step, the textile printing ink of the present invention ejected from nozzle openings of an inkjet printer head adheres to the fabric surface and the transfer paper substrate, respectively, to thereby form an image.

The fabric on which the image is formed in the image forming step is preferably further heated at a temperature higher than room temperature. In the above-described transfer textile printing method, the fabric to which the image was transferred from the transfer paper in the transfer step is preferably heated at a temperature higher than room temperature. Through the heating treatment at a temperature higher than room temperature, removal of volatile components such as a solvent derived from the ink and contained in the image formed on the fabric can be promoted, and fixation of the image can be promoted. In addition, adhesion or the like of the image can be improved by film formation (fusion) of the binder resin (polymer A) contained in the ink.

The heating may be implemented simultaneously with the image forming step or the transfer step, or may be carried out after the image forming step or the transfer step. Alternatively, both may be implemented in combination. For example, the method in which the heating is implemented simultaneously with the image forming step and the transfer step includes a method in which the image forming step and the transfer step are carried out while the fabric is heated. When the heating is implemented after the image forming step or the transfer step, preferable examples of the heating method include a heating method using a heating-drying furnace, a heating method using a heat press, a heating method using an infrared lamp, and a method using steam such as normal-pressure steam or high-pressure steam. Among these methods, the heating is preferably implemented after the image formation or the transfer step because the airflow may be disturbed when heating is implemented simultaneously.

The heating temperature is preferably from 90 to 180°C. The upper limit is more preferably 150°C or lower, even more preferably 130°C or lower, and particularly preferably 120°C or lower, and the lower limit is more preferably 95°C or higher, and even more preferably 100°C or higher. That is, the heating temperature is preferably from 90 to 180°C, more preferably from 95 to 150°C, even more preferably from 100 to 130°C, and still more preferably from 100 to 120°C. A textile printed product having more excellent fastness to washing can be produced within a short time by adjusting the heating temperature to fall within the above range. However, the heating temperature is not limited to the above-described range, and may be, for example, a temperature near room temperature, for example, a temperature of from 15 to 25°C. Even at such a temperature, a textile printed product having sufficient fastness to washing can be produced by heating for a long period of time or allowing to stand for a long period of time. However, from the viewpoint of shortening the heating time, the heating temperature is preferably 30°C or higher, more preferably 50°C or higher, and still more preferably 90°C or higher.

The textile printed product produced after the above-described heating may be washed with water and dried.

The present application claims the benefit of priority based on JP 2022-185287 filed on November 18, 2022. The entire content of the specification of JP 2022-185287 filed on November 18, 2022 is incorporated herein by reference.

## EXAMPLES

The present invention will be described in more detail below by way of Examples, but is not limited to only these Examples. Unless otherwise specified, "parts" means "parts by mass" and "%" means "mass%". Measurement methods and evaluation methods are described below.

Average Particle Size of Emulsion Particles

The average particle size (volume-based) of emulsion particles was determined through cumulant method analysis by measuring particle sizes using an emulsion produced in each Production Example as a measurement sample and using a particle size distribution analyzer (available from Otsuka Electronics Co., Ltd., product number: FPAR-1000) based on the dynamic light scattering method.

Average Particle Size of Pigment

The average particle size (volume-based) of a pigment was determined through cumulant method analysis by measuring particle sizes using a pigment dispersion produced in each Production Example as a measurement sample and using a particle size distribution analyzer (available from Otsuka Electronics Co., Ltd., product number: FPAR-1000) based on the dynamic light scattering method.

Ink Viscosity

The viscosity of an ink was determined by using an ink produced in each of Examples and Comparative Examples as a measurement sample and measuring the viscosity of the sample using an E-type viscosimeter TPE-100 (available from Toki Sangyo Co., Ltd.) with a rotor R24 at 0.8 degrees and a temperature of 25°C.

Fastness to Wet Rubbing

An image-printed fabric produced in each of Examples and Comparative Examples was subjected to a wet rubbing test in accordance with the method prescribed in JIS L0849 using a type II tester having attached white cloth of cotton No. 3-1 at a load 200 g with 100 reciprocations, and the fastness to wet rubbing was evaluated using a gray scale for discoloration and fading.

◎: Contamination of grade 4-5 or higher in wet rubbing test
○: Contamination of grade 3-4 or grade 4 in wet rubbing test
△: Contamination of grade 2-3 or grade 3 in wet rubbing test
×: Contamination of grade 2 or less in wet rubbing test

Fastness to Washing

An image-printed fabric produced in each of Examples and Comparative Examples was washed 10 times by normal washing in a household washing machine (washing conditions: washing in normal mode → rinsing → spinning to remove water → drying, using liquid detergent Ariel (available from The Procter & Gamble Company)), and the degree of fading was evaluated using a gray scale for discoloration and fading.

◎: Grade 4-5 or grade 5
○: Grade 3-4 or grade 4
△: Grade 2-3 or grade 3
×: Grade 2 or less

Polymer Production Examples

Polymer Production Example 1

A flask equipped with a dropping funnel, a stirrer, a nitrogen gas inlet tube, a thermometer, and a reflux condenser was charged with 252 parts of deionized water. A pre-emulsion for dropwise addition containing 437 parts of deionized water, 80 parts of a 25% aqueous solution of an emulsifier (trade name: ADEKA REASOAP SR-10, available from ADEKA CORPORATION), and, as monomer components, 25 parts of acrylic acid, 565 parts of 2-octyl acrylate, 50 parts of cyclohexyl methacrylate, 10 parts of 2-hydroxyethyl methacrylate, and 350 parts of methyl methacrylate was prepared in the dropping funnel. 44 parts of the pre-emulsion (corresponding to 3% of the total amount of the pre-emulsion) were added into the flask, the temperature was increased to 80°C while nitrogen gas was gently blown, 30 parts of 5% aqueous ammonium persulfate solution were added, and polymerization was initiated. Subsequently, the remainder of the pre-emulsion for dropwise addition and 30 parts of 5% aqueous ammonium persulfate solution were uniformly added dropwise into the flask over 240 minutes. After completion of the dropwise addition, the content of the flask was maintained at 80°C

for 180 minutes, after which 25% aqueous ammonia and deionized water were added to adjust the pH to 8.5 and the solid content to 50%, and polymerization was terminated. The resultant reaction liquid was cooled to room temperature, and then filtered through a wire mesh of 300 mesh to produce an emulsion (1) composed of dispersed emulsion particles (1) containing a polymer having constituent units derived from the monomer components used. The Tg of the produced emulsion particles (1) was -1°C, and the average particle size of the emulsion particles (1) in the emulsion (1) was 200 nm.

Polymer Production Examples 2 to 11

Emulsions (2) to (11) in which respective emulsion particles (2) to (11) were dispersed were produced in the same manner as in Polymer Production Example 1 except that the monomer components shown in Table 1 were used. The Tg and average particle size of each of the produced emulsion particles are shown in Table 1.

[Table 1]

| | | | Polymer Production Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Monomer Components | 2-Octyl acrylate | parts | 565 | 565 | 200 | 0 | 850 | 0 | 0 | 0 | 0 | 0 | 0 |
| | 2-Octyl methacrylate | parts | 0 | 0 | 0 | 0 | 0 | 0 | 850 | 0 | 0 | 1000 | 300 |
| | Isobornyl acrylate | parts | 0 | 0 | 0 | 350 | 0 | 333 | 0 | 0 | 0 | 0 | 0 |
| | Cyclohexyl methacrylate | parts | 50 | 50 | 50 | 50 | 50 | 50 | 0 | 0 | 0 | 0 | 0 |
| | Methyl methacrylate | parts | 350 | 0 | 0 | 0 | 0 | 0 | 0 | 400 | 0 | 0 | 0 |
| | 2-Ethylhexyl acrylate | parts | 0 | 0 | 365 | 565 | 0 | 565 | 50 | 565 | 565 | 0 | 445 |
| | 2-Hydroxyethyl methacrylate | parts | 10 | 10 | 10 | 10 | 10 | 10 | 10 | 10 | 10 | 0 | 10 |
| | Acrylic acid | parts | 25 | 25 | 25 | 25 | 25 | 25 | 25 | 25 | 25 | 0 | 25 |
| | Styrene | parts | 0 | 350 | 350 | 0 | 65 | 17 | 65 | 0 | 400 | 0 | 220 |
| Tg | | °C | -1 | -2 | -14 | -32 | -34 | -31 | 6 | -19 | -20 | 5 | -21 |
| Average particle size | | nm | 200 | 190 | 200 | 210 | 180 | 210 | 180 | 200 | 200 | 190 | 200 |
| Proportion of monomer b | | % | 61.5 | 61.5 | 25.0 | 40.0 | 90.0 | 38.3 | 85.0 | 0 | 0 | 100 | 30.0 |

In Table 1, the "Proportion of monomer b" refers to the mass ratio of the monomer b to the total of the monomer components used in the production of the emulsion particles (polymer), i.e., the "proportion of monomer b" corresponds to the amount of the structural unit derived from the monomer b in the polymer.

Pigment Dispersion Production Examples

Pigment Dispersion Production Example 1

Three parts of a dispersant Joncryl 678 (available from BASF SE), 1.3 parts of dimethylaminoethanol, and 81 parts of deionized water were stirred and mixed at 70°C. Subsequently, 15 parts of C.I. Pigment Blue 15:3 (LIONOL BLUE FG-7330; available from Toyo Ink Co., Ltd.) as a blue pigment, 0.1 parts of Olfine D-10PG (available from Nissin Chemical Industry Co., Ltd.) as a surfactant, and zirconia beads having a particle size of 0.5 mm were filled at a volumetric rate of 50%, dispersed using a bead mill, and filtered through a filter having a pore size of 1 μm (MCP-1-C10S, available from Advantec Co., Ltd.,) to produce a blue pigment dispersion (pigment dispersion (1)) having a pigment content of 15%. The average particle size of the pigment was 90 nm.

Pigment Dispersion Production Example 2

Five parts of Discoat N-14 (available from DKS Co., Ltd.) as a dispersant, 6 parts of propylene glycol, 70 parts of deionized water, 100 parts of titanium oxide CR-95 (available from Ishihara Sangyo Kaisha, Ltd.), and zirconia beads having a particle size of 0.5 mm were filled at a volumetric rate of 50%, and dispersed using a bead mill to produce a white pigment dispersion (pigment dispersion (2)) having a pigment content of 55%. The average particle size of the pigment was 330 nm.

Example 1

Ink Production

An ink (1) was produced by mixing 30 parts of the emulsion (1) (15 parts as emulsion particles) produced in Polymer Production Example 1, 23 parts of the pigment dispersion (1) (3.5 parts as a pigment) produced in Pigment Dispersion Production Example 1, 2 parts of diethylene glycol monobutyl ether, 15 parts of propylene glycol (moisturizing component), 0.3 parts of KF 6011 (available from Shin-Etsu Chemical Co., Ltd.) as a surfactant, and 29.7 parts of deionized water, and then filtering the mixture through a filter having a pore diameter of 1 $\mu$m (MCP-1-C10S, available from Advantec Co., Ltd.). The viscosity of the produced ink (1) was 4 mPa·s, and the ink (1) was able to be ejected by an inkjet method.

Image Formation by Inkjet Method

The ink (1) produced above was introduced into textile printer MMP-TX13 available from Mastermind Co., Ltd., and 120 mm $\times$ 120 mm solid printing was implemented on a white cotton fabric (white t-shirt of 100% cotton, available from Hanes Inc.) at 1440 dpi $\times$ 1440 dpi and a printing speed setting of 8 to form an image on the fabric. The image-formed fabric was heat-treated in a hot air dryer at 110°C for 90 seconds to produce a fabric (1) on which the image was printed. The image-printed fabric (1) bended easily and had a softness equivalent to that of the original fabric before printing of the image.

Examples 2 to 13 and Comparative Examples 1 and 2

Inks (2) to (13) according to Examples 2 to 13 and inks (C1) to (C2) according to Comparative Examples 1 and 2 were produced in the same manner as in Example 1 except that the types and charging amounts of the components shown in Table 2 were changed as shown in Table 2, and the charging amount of deionized water was adjusted so that the total amount was 100 parts. The crosslinking agent shown in Table 2 was EPOCROS WS-700 (available from Nippon Shokubai Co., Ltd., solid content of 25%). Each of the produced inks (2) to (13) and inks (C1) to (C2) had a viscosity of from 4 to 5 mPa·s and was able to be ejected by an inkjet method.

Subsequently, as in the case of Example 1, each of the inks of the Examples and Comparative Examples was used to form an image by the inkjet method, and the formed image was subjected to a heat treatment, to thereby produce fabrics (2) to (13) and fabrics (C1) to (C2), each having an image printed thereon. The image-printed fabric produced in each of the Examples and Comparative Examples bended easily and had a softness equivalent to that of the original fabric before printing of the image.

In Examples 1, 2, and 4 to 13 and Comparative Examples 1 and 2, a white cotton fabric (white t-shirt of 100% cotton, available from Hanes Inc.) similar to the cotton fabric used in Example 1 was used as the cotton fabric, and in Example 3, a black cotton fabric (black T-shirt of 100% cotton, available from Hanes Inc.) was used as the cotton fabric.

Fabric Evaluation

The fabrics (1) to (13) and the fabrics (C1) to (C2) produced in the respective Examples and Comparative Examples were evaluated for fastness to wet rubbing and fastness to washing. The evaluation results are shown in Table 2.

[Table 2]

| | | Example | | | | | | | | | | | | | Comparative Example | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 |
| Type of ink | | (1) | (2) | (3) | (4) | (5) | (6) | (7) | (8) | (9) | (10) | (11) | (12) | (13) | (C1) | (C2) |
| Type of emulsion | | (1) | (1) | (1) | (2) | (3) | (4) | (5) | (6) | (7) | (10) | (11) | (11) | (7), (9) | (8) | (9) |
| Charging amount of emulsion particles | parts | 15 | 15 | 15 | 15 | 15 | 15 | 15 | 15 | 15 | 15 | 15 | 15 | 7.5, 7.5 | 15 | 15 |
| Type of pigment dispersion | | (1) | (1) | (2) | (1) | (1) | (1) | (1) | (1) | (1) | (1) | (1) | (1) | (1) | (1) | (1) |
| Charging amount of pigment | parts | 3.5 | 3.5 | 16 | 3.5 | 3.5 | 3.5 | 3.5 | 3.5 | 3.5 | 3.5 | 3.5 | 3.5 | 3.5 | 3.5 | 3.5 |
| Crosslinking agent | | - | WS-700 | - | - | - | - | - | - | - | - | - | WS-700 | WS-700 | - | - |
| Charging amount of crosslinking agent | parts | 0 | 0.8 | 0 | 0 | 0 | 0 | 0 | 0 | 0 | 0 | 0 | 0.8 | 0.8 | 0 | 0 |
| Moisturizing component | | PG | PG | PG | PG | TEG | PG | PG | PG | PG | PG | PG | PG | PG | PG | PG |
| Charging amount of moisturizing component | parts | 15 | 15 | 15 | 15 | 15 | 15 | 15 | 15 | 15 | 15 | 15 | 15 | 15 | 15 | 15 |
| Fastness to wet rubbing | | ◎ | ◎ | ◎ | ◎ | ◎ | ○ | ◎ | ○ | ◎ | ○ | ◎ | ◎ | ◎ | △ | △ |
| Fastness to washing | | ○ | ◎ | ○ | ○ | ○ | △ | △ | △ | △ | △ | ○ | ◎ | ◎ | × | △ |

In Table 2, PG represents propylene glycol, and TEG represents triethylene glycol.

INDUSTRIAL APPLICABILITY

The ink of the present invention can be suitably used as a textile printing ink because the resultant textile printed product exhibits excellent fastness to wet rubbing.

## Claims

1. A textile printing ink comprising a polymer having a structural unit derived from an ester of (meth)acrylic acid and a secondary alcohol.

2. The textile printing ink according to claim 1, wherein a content of the polymer in the textile printing ink is from 1 to 30 mass%.

3. The textile printing ink according to claim 1, further comprising an aqueous solvent containing water and a water-soluble organic solvent, wherein
a content of the water-soluble organic solvent is from 10 to 40 mass% per 100 mass% of the aqueous solvent.

4. The textile printing ink according to claim 1, wherein the ester of (meth)acrylic acid and a secondary alcohol contains at least one selected from the group consisting of 2-octyl (meth)acrylate and isobornyl (meth)acrylate.

5. The textile printing ink according to claim 1, wherein the textile printing ink is for inkjet textile printing.

6. A fabric printed with the textile printing ink described in any of claims 1 to 5.

7. A polymer for a textile printing ink, the polymer comprising a structural unit derived from an ester of (meth)acrylic acid and a secondary alcohol.

8. The polymer according to claim 7, wherein the ester of (meth)acrylic acid and a secondary alcohol contains at least one selected from the group consisting of 2-octyl (meth)acrylate and isobornyl (meth)acrylate.

9. The polymer according to claim 7, wherein a content of the structural unit derived from the ester of (meth)acrylic acid and a secondary alcohol is from 5 to 100 mass% per 100 mass% of the polymer.

10. The polymer according to claim 7, wherein the polymer has a glass transition temperature of from -50 to 10°C.

11. An emulsion for a textile printing ink, the emulsion comprising the polymer described in claim 7.

12. A method for textile printing using an ink containing a polymer having a structural unit derived from an ester of (meth) acrylic acid and a secondary alcohol.

13. A method for producing a printed fabric, the method comprising printing on a fabric an ink containing a polymer having a structural unit derived from an ester of (meth)acrylic acid and a secondary alcohol.

## INTERNATIONAL SEARCH REPORT

International application No.
**PCT/JP2023/040100**

**A. CLASSIFICATION OF SUBJECT MATTER**

***D06P 5/30***(2006.01)i; ***C09D 11/30***(2014.01)i; ***D06P 1/52***(2006.01)i
FI: D06P5/30; D06P1/52; C09D11/30

According to International Patent Classification (IPC) or to both national classification and IPC

**B. FIELDS SEARCHED**

Minimum documentation searched (classification system followed by classification symbols)

D06P1/00-7/00; C09D11/00-13/00; B41J2/01; B41M5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2010-528120 A (CLARIANT FINANCE (BVI) LTD.) 19 August 2010 (2010-08-19) paragraphs [0045], [0046], [0055], [0059], [0083], [0094], [0095], table 1, synthesis example 8 | 1-9, 11-13 |
| Y | paragraphs [0045], [0046], [0055], [0059], [0083], [0094], [0095], table 1, synthesis example 8 | 10 |
| X | WO 2021/153288 A1 (NIPPON SHOKUBAI CO., LTD.) 05 August 2021 (2021-08-05) paragraphs [0085], [0128], [0129], [0189]-[0196], [0221], [0222], table 1, examples 13, 14 | 1-3, 5-7, 9-13 |
| Y | paragraphs [0032], [0085], [0128], [0129], [0189]-[0196], [0221], [0222], table 1, examples 13, 14 | 4, 8 |
| X | WO 2016/072349 A1 (FUJIFILM CORP.) 12 May 2016 (2016-05-12) paragraphs [0095], [0129]-[0136], [0145], table 2, example 6 | 1-3, 5-7, 9, 11-13 |
| Y | paragraphs [0018], [0059], [0095], [0129]-[0136], [0145], table 2, example 6 | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/040100**

**C. DOCUMENTS CONSIDERED TO BE RELEVANT**

| Category* | Citation of document, with indication, where appropriate, of the relevant passages | Relevant to claim No. |
|---|---|---|
| X | JP 2022-57162 A (SEIKO EPSON CORP.) 11 April 2022 (2022-04-11) paragraphs [0182], [0183], [0220], [0227], table 4, example 6 | 1-3, 5-7, 9, 11-13 |
| Y | paragraphs [0006], [0028], [0182], [0183], [0220], [0227], table 4, example 6 | 4, 8, 10 |
| Y | JP 2016-524020 A (ARKEMA FRANCE) 12 August 2016 (2016-08-12) claims 1, 6, paragraphs [0026], [0036], tables 3, 5, examples, dispersion D4 | 1-13 |
| A | US 2019/0367644 A1 (DSM IP ASSETS B.V.) 05 December 2019 (2019-12-05) entire text | 1-13 |

Form PCT/ISA/210 (second sheet) (July 2022)

**INTERNATIONAL SEARCH REPORT**
**Information on patent family members**

International application No.
**PCT/JP2023/040100**

| Patent document cited in search report | Publication date (day/month/year) | Patent family member(s) | Publication date (day/month/year) |
|---|---|---|---|
| JP 2010-528120 A | 19 August 2010 | US 2011/0244385 A1 paragraphs [0057], [0058], [0067], [0068], [0071], [0095], [0106], table 1, synthesis example 8 | |
| WO 2021/153288 A1 | 05 August 2021 | US 2023/0094605 A1 paragraphs [0037], [0090], [0133], [0134], [0194]-[0201], [0226]-[0228], table 1, examples 13, 14 | |
| WO 2016/072349 A1 | 12 May 2016 | US 2017/0190188 A1 paragraphs [0058], [0127], [0186], [0266]-[0292], [0321]-[0325], table 2, example 6 | |
| JP 2022-57162 A | 11 April 2022 | US 2022/0098424 A1 paragraphs [0006], [0028], [0179], [0180], [0217], [0221], table 4, example 6 | |
| JP 2016-524020 A | 12 August 2016 | US 2016/0152751 A1 claims 1, 8, paragraphs [0026], [0036], tables 3, 5, examples, dispersion D4 | |
| US 2019/0367644 A1 | 05 December 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018009260 A
- JP 2022 A
- JP 185287 A
- JP 2022185287 A